# EUROPÄISCHE PATENTSCHRIFT

(11) **EP 1 214 193 B1**
(45) Veröffentlichungstag und Bekanntmachung des Hinweises auf die Patenterteilung: **24.05.2006**
(21) Anmeldenummer: 01907458.2
(22) Anmeldetag: 17.01.2001
(51) Int. Cl.: B32B 27/30, B32B 27/20, C08J 7/04, A47K 3/02

(54) **SELBSTVERSTÄRKTE, THERMOPLASTISCH FORMBARE PLATTE AUS POLY(METH)ACRYLAT, VERFAHREN ZU DEREN HERSTELLUNG SOWIE AUS DER PLATTE HERGESTELLTER SANITÄRARTIKEL**
SELF-REINFORCED, THERMOPLASTICALLY MOLDABLE POLY(METH)ACRYLATE PANEL, METHOD FOR THE PRODUCTION THEREOF AND SANITARY ARTICLE PRODUCED WITH SAID PANEL
PANNEAU EN POLY(METH)ACRYLATE A FORMAGE THERMOPLASTIQUE, AUTO-RENFOR ATEUR, SON PROCEDE DE FABRICATION ET ARTICLE SANITAIRE FABRIQUE A PARTIR DE CE PANNEAU

(30) Priorität: 03.02.2000 DE 10004449
(43) Veröffentlichungstag der Anmeldung: 19.06.2002
(73) Patentinhaber: Röhm GmbH & Co. KG, 64293 Darmstadt (DE)
(72) Erfinder: SCHÖLA, Egbert, A-7052 Müllendorf (AT); SCHWENNINGER, Robert, A-2232 Deutsch Wagram (AT); MOLNAR, Gerald, A-2440 Gramatneusiedl (AT)
(86) Internationale Anmeldenummer: PCT/EP2001/000487
(87) Internationale Veröffentlichungsnummer: WO 2001/056784

(56) Entgegenhaltungen:
- DE-A- 4 313 925
- DE-A- 19 714 399
- DE-A- 19 814 266

## Beschreibung

Die vorliegende Erfindung betrifft thermoplastisch formbare, selbstverstärkte Platten aus Poly(meth)acrylat, Verfahren zur Herstellung solcher Poly(meth)acrylatplatten sowie Sanitärartikel wie Badewannen, Duschtassen oder Waschbecken, die aus diesen Halbzeug-Platten hergestellt werden können.

Insbesondere betrifft die vorliegende Erfindung selbstverstärkte, thermoplastisch formbare Platten aus Poly(meth)acrylat, die mindestens zwei Schichten aufweisen, die sich in ihrem Füllstoffgehalt unterscheiden, wobei der Füllstoffgehalt den prozentualen Anteil des Gewichts der verstärkend wirkenden Füllstoffe am Gesamtgewicht der jeweiligen Schicht angibt.

Diese Polyacrylatplatten dienen insbesondere zur Herstellung von Sanitärartikel, wie beispielsweise Badewannen, Duschwannen und Spülbecken.

Prinzipiell werden Sanitärartikel durch einen mehrstufigen, mindestens vierstufigen, Herstellungsprozeß gefertigt. Zunächst wird eine Acrylglasplatte hergestellt, die anschließend thermogeformt wird. Wegen der unzureichenden mechanischen Festigkeit des Formkörpers, muß eine Verstärkungsschicht aufgebracht werden. Dies erfolgt durch Aufsprühen eines Glasfaserstyrolgemisches auf die Rückseite des Formkörpers. Dabei wird zur Verstärkung des Bodenbereiches häufig eine Holzplatte eingefügt, die ebenfalls durch das Aufsprühen von Glasfaser aufweisendem Harzmaterial fixiert wird.

Nach dem Verstärken werden abstehende Glasfasern an die Rückwand gerollt. Nach diesen Arbeitsschritten ist es notwendig, den so hergestellten Sanitärartikel zu tempern, um die Verstärkungsschicht zu polymerisieren.

Nachteilig an diesem Verfahren sind die verschiedenen personalintensiven Arbeitsschritte und die störenden Lösungsmittelemissionen bei der Hinterfütterung allgemein sowie das Glasfaserhandling, das auch ein großes Gefahrenpotential per se bedeutet. Schließlich ist die Rezyklierbarkeit der Sanitärartikel aufgrund der Verarbeitung unterschiedlicher Kunststoffkomponeneten sowie des Materialmix von verstärkenden Stoffen und Kunststoffen schlecht.

Einen gewissen Fortschritt bei der Vermeidung der angesprochenen Nachteile erreicht man durch die Vorgehensweise gemäß der WO 98/45375 = PCT/EP98/01881. Die Verstärkungsschicht besteht gemäß dieser Druckschrift aus einem kalt härtenden (Meth)acrylatharz, welches einen Gehalt an 1 bis 75 Gewichtsprozent an Feinfüllstoffen mit einer Partikelgröße von nicht mehr als 100 µm aufweist. Damit gelingt es unter Verzicht auf fasrige Füllstoffe wie Asbest oder Glasfaserhäcksel einen Sanitärartikel bereitzustellen, welcher vollständig rezyklierbar ist und dennoch die geforderten mechanischen Eigenschaften erfüllt.

Allerdings ist das Aufbringen der Verstärkungsschicht in einem Sprühverfahren nicht ganz unproblematisch, zumindest unter dem Aspekt der Arbeitssicherheit, vor allem durch die gesundheitliche Gefährdung des Arbeitspersonals.

Die WO 97/46625 = PCT/GB97/01523 (ICI) schlägt vor, die Gefährdung des Arbeits- und Bedienpersonals dadurch zu verringern, daß zur Härtung des aufzusprühenden (Meth)acrylatsystems wässrige Härtersysteme eingesetzt werden. Hierdurch wird zwar die Beeinträchtigung durch Lösemittel (Ethylmethylketon, andere Ketone, organische Lösungsmittel und dergleichen) beim Sprühvorgang reduziert, allerdings doch nur geringfügig, da die einzusetzende Härtermenge im Vergleich zur Bindemittelkomponente vernachlässigbar gering ist. Vielmehr ist das Sprühauftragen selbst ein nicht ganz von Gefahren freier Arbeitsvorgang. So ist beispielsweise die beim Versprühen unvermeidbare feinste Verteilung von vergleichsweise flüchtigen polymerisierbaren Bestandteilen des (Meth)acrylatharzes anzuführen. Die ansich relativ niedrigen MAK-Werten für MMA und andere Monomere werden beim Sprühauftragen sehr viel schneller erreicht als etwa bei anderen Verarbeitungsmethoden. Es wäre insbesonders wünschenswert, auf das nachträgliche Aufsprühen oder Auftragen einer Verstärkungsschicht verzichten zu können.

Angesichts des hierin genannten und diskutierten Standes der Technik war es eine Aufgabe der Erfindung, Platten (plattenförmiges Halbzeug) aus Poly(meth)acrylat bereitzustellen, aus denen (dem) die zuvor näher bezeichneten Sanitärartikel mit einem möglichst geringen Fertigungsaufwand hergestellt werden können.

Zugleich ist die Schaffung vollständig rezyklierbarer (selbst-) verstärkter Platten aus Poly(meth)acrylat ("Acrylglasplatten") die Aufgabe der Erfindung gewesen.

Eine weitere Aufgabe ist darin zu sehen, daß das Verfahren zur Herstellung des Platten-Halbzeugs sowie der Sanitärartikel mit möglichst geringen Emissionen (Lösemittel, flüchtige und gefährliche Stoffe, wie Monomere und ähnliche) verbunden sein sollte.

Des weiteren sollte das Halbzeug mit den zur Zeit technisch üblichen Produktionsverfahren hergestellt und verarbeitet werden können.

Noch eine Aufgabe der Erfindung ist die Bereitstellung vollständig rezyklierbarer Formkörper, wie vorzugsweise Duschtassen oder Waschbecken, die insbesondere unter Einsatz der an sich für Acrylglas bekannten Depolymerisationstechnik mittels Metallbädern, vollständig und möglichst ohne Gefährdung des Bedienpersonals rezyklierbar sind.

Eine weitere Aufgabe der Erfindung ist darin zu sehen, plattenförmiges Halbzeug zur Verfügung zu stellen, aus dem Sanitärartikel, wie vorzugsweise Badewannen oder Duschtassen, hergestellt werden können, die bei möglichst hoher Materialersparnis den allgemeinen Anforderungen genügen, wie sie im Hinblick auf die Stabilität an eben solche Sanitärartikel gestellt werden.

Auch soll die Bildung von Rissen im Sanitärartikel, die gerade bei Hochleistungsverformungen von Poly(meth)acrylatplatten (Halbzeug) eine besondere Gefahr darstellt, möglichst zurückgedrängt werden.

Noch eine weitere Aufgabe ist in der Bereitstellung eines möglichst schlagfesten Halbzeugs in Form einer Poly(meth)acrylatplatte zu sehen.

Außerdem sollen sowohl das neue Halbzeug (plattenförmiger Körper) als auch der hieraus herstellbare neue Sanitärartikel (Formkörper) möglichst einfach zu fertigen sein.

Weiters soll das Nachbearbeiten per Hand auf ein Mindestmaß reduziert werden.

Schließlich spielt auch eine möglichst hohe und einfache Automatisierbarkeit des Verfahrens zur Herstellung der Formkörper aus (selbst-) verstärkten Poly(meth)acrylatplatten eine nicht unwesentliche Rolle.

Von besonderem Interesse ist auch die Schaffung eines Sanitärartikels aus (selbst-) verstärkten Poly(meth)acrylatplatten, welcher hohe und/oder verbesserte Werte hinsichtlich eines, mehrerer oder aller der mechanischen Parameter wie Abreißfestigkeit, Biegefestigkeit (gemessen auf der Innenseite (Oberseite) des Acrylglasformteils), Biegefestigkeit (rückseitig (unterseitig) gemessen), E-Modul, Schlagzähigkeit (gemessen auf der Seite des Acrylglasformteils, innenseitig oder oberseitig), Schlagzähigkeit (rückseitig (entspricht "beschichtungsseitig" beim Stand der Technik) gemessen) aufweist.

Gelöst werden diese Aufgaben sowie weitere Aufgaben, die zwar nicht im einzelnen wörtlich genannt wurden, die sich jedoch aus der einleitenden Diskussion des Standes der Technik ohne weiteres erschließen oder wie selbstverständlich ableiten lassen, durch eine selbstverstärkte, thermoplastisch formbare Poly(meth)acrylatplatte mit allen Merkmalen des Anspruches 1.

Vorteilhafte Ausgestaltungen der erfindungsgemäßen Polyacrylatplatte sind Gegenstand der auf den unabhängigen Produktanspruch rückbezogenen Ansprüche.

In verfahrensmäßiger Hinsicht geben die Merkmale des unabhängigen Verfahrensanspruchs eine Lösung des der Erfindung im Hinblick auf die Verfahrensaspekte zugrunde liegenden Problems an. Vorteilhafte Verfahrensvarianten werden in den vom unabhängigen Verfahrensanspruch abhängigen Verfahrensansprüchen unter Schutz gestellt.

Hinsichtlich des Sanitärartikels liefert der entsprechende Anspruch die Lösung des der Anmeldung in dieser Hinsicht zugrunde liegenden Problems, wobei vorteilhafte Ausgestaltungen Gegenstand der auf diesen Produktanspruch rückbezogenen Ansprüche ist.

Dadurch, daß eine Platte aus Poly(meth)acrylat mindestens zwei Schichten aufweist, die sich in ihrem Füllstoffgehalt unterscheiden, wobei das Verhältnis von Reißdehnung der Schicht mit höherem Füllstoffgehalt zu Reißdehnung der Schicht mit niedrigerem Füllstoffgehalt kleiner als 1,5 ist, gelingt es eine Poly(meth)acrylatplatte zur Verfügung zu stellen, aus der, beispielsweise durch einfache an sich bekannte Warmformverfahren, Sanitärartikel hergestellt werden können, die alle von den Norminstituten und den industriellen Verarbeitern bezüglich der physikalischen Eigenschaften des Sanitärartikels aufgestellten Forderungen in herausragender Weise erfüllen. Hinzu kommt eine große Zahl weiterer Vorteile.

Hierzu gehören unter anderem:
⇒ Vollständige Recyclierbarkeit auf dem Weg der an sich bekannten Depolymerisation unter anderem durch Vermeidung von Polyestern sowie Asbest- oder Glasfasern (Polyesterharzfreiheit, Asbestfreiheit, Glasfaserfreiheit).
⇒ Entfallen der Hinterfütterung bei der Fertigung, d.h. des Auftragens einer Verstärkungsschicht nach der Formgebung des Sanitärartikels und dadurch weitergehende Automatisierung des Herstellungsverfahrens.
⇒ Mechanische Eigenschaften gemäß DIN EN 198 (Verformbarkeit, Schlagzähigkeit, Steifigkeit) werden in hervorragender Weise eingehalten und über die verlangten Maße hinaus erfüllt.
⇒ Mechanische Eigenschaften gemäß DIN ISO 179 (Schlagfestigkeit) werden in hervorragender Weise eingehalten und über die verlangten Maße hinaus erfüllt.
⇒ Mechanische Eigenschaften gemäß DIN ISO 178 (Biegefestigkeit) werden in hervorragender Weise eingehalten und über die verlangten Maße hinaus erfüllt.
⇒ Mechanische Eigenschaften gemäß DIN ISO 4624 (Haftzugfestigkeit) werden in hervorragender Weise eingehalten und über die verlangten Maße hinaus, erfüllt.
⇒ Hohe Festigkeit der Formteile bei Beanspruchung und überragende Dauerhaftigkeit der Verbindung zwischen den beiden Schichten der Poly(meth)acrylatplatte.
⇒ Es können bei der Herstellung der Poly(meth)acrylatplatte und des Sanitärartikels kommerziell erhältliche Maschinen und Anlagen verwendet werden, so daß auf den Einsatz von teuerem Spezialwerkzeug weitestgehend verzichtet werden kann.
⇒ Durch die Lösungsmittelfreiheit bei der Herstellung des Sanitärartikels aus der Poly(meth)acrylatplatte, also aus dem Halbzeug, wird die Gefahr des Auftretens von Spannungsrissen minimiert. Lösungsmittelhaltige Systeme, wie sie gegebenenfalls bei der Hinterfütterung von Acrylglasformteilen eingesetzt werden, neigen insbesondere beim Temperaturwechseltest nach DIN EN 198 zu Spannungsrissen in der fertigen Verstärkungsschicht.
⇒ Durch den Einsatz von bestimmten Füllstoffen in der Schicht mit höherem Füllstoffgehalt gelingt es, die mechanischen und physikalischen Eigenschaften eines erfindungsgemäßen Sanitärartikels stark zu verbessern.

Selbstverstärkte Poly(meth)acrylatplatten oder selbstverstärkte Platten aus Poly(meth)acrylat sind im Rahmen der vorliegenden Erfindung Platten oder Halbzeuge, die mindestens zwei Schichten aufweisen, welche sich in ihrem Füllstoffgehalt unterscheiden.

Unter Platten sollen flächige Gebilde verstanden werden, die sowohl rund, eckig und halbrund sein können. Der Begriff "selbstverstärkt" setzt sich aus Verstärkung" und "selbst" zusammen. "Verstärkung" bezieht sich hierbei auf die Verbesserung von mechanischen Eigenschaften in bezug auf eine vergleichbare Platte, die jedoch keine Schicht mit einem hohen Füllstoffgehalt aufweist. Sie kann beispielsweise durch den E-Modul gemäß DIN 53 457 bestimmt werden. Hierbei ist jede Zunahme des E-Moduls als Verstärkung aufzufassen. Der Begriff "selbst" soll impliziern, daß die Anwendung einer "Verstärkung" nach der Formgebung der Platte zu einem Sanitärartikel nicht nötig ist. Vielmehr lassen sich aus einer "selbstverstärkten" Platte alltagstaugliche Sanitärartikel ohne Einsatz zusätzlicher Verstärkungen formen.

Gemäß der Erfindung muß die Poly(meth)acrylatplatte mindestens zwei Schichten enthalten, die sich in ihrem Füllstoffgehalt unterscheiden. Der Füllstoffgehalt gibt den prozentualen Anteil der verstärkend wirkenden Füllstoffe am Gesamtgewicht der jeweiligen Schicht an (w/w)%. Neben den verstärkenden Füllstoffen sind auch im wesentlichen nicht verstärkend wirkende Füllstoffe, wie etwa Farbpigmente oder andere an sich bekannte Additive, möglich. Sie finden jedoch bei der Bestimmung des Gehalts an verstärkenden Füllstoffen für die Ermittlung des Gewichts der verstärkenden Füllstoffe keine Berücksichtigung sondern nur bei der Ermittlung des Gesamtgewichts der jeweiligen Schicht. Vorzugsweise ist das Verhältnis von Füllstoffgehalt der Schicht mit höherem Füllstoffgehalt zu Füllstoffgehalt der Schicht mit niedrigerem Füllstoffgehalt größer als 2, besonders bevorzugt größer als 4 und ganz besonders bevorzugt größer als 8 oder 16, bezogen auf das Gewicht der Füllstoffe.

Im allgemeinen liegt der Füllstoffanteil der Schicht mit niedrigerem Füllstoffgehalt im Bereich von 0 bis weniger als 20 Gew.-%, bezogen auf das gesamte Gewicht der Schicht, wohingegen der Füllstoffanteil der Schicht mit höherem Füllstoffgehalt im allgemeinen im Bereich von 20 bis 80 Gew.-% liegt, bezogen auf das Gesamtgewicht der Schicht mit höherem oder hohem Gehalt an verstärkenden Füllstoffen

Eine besonders zweckmäßige Variante sieht vor, daß die Schicht mit niedrigerem Füllstoffgehalt gänzlich frei ist von verstärkend wirkenden Füllstoffen. Auf diese Art und Weise gelingt insbesonders die Bereitstellung von hochglänzenden Oberflächen, wie sie bei Acrylglas in Sanitärqualität erwünscht ist.

Füllstoffe sind Zusätze in fester Form, die sich hinsichtlich ihrer Zusammensetzung und Struktur wesentlich von der Poly(meth)acrylat-Matrix unterscheiden. Es kann sich hierbei sowohl um anorganische als auch um organische Materialien handeln.

Art, Form und Menge der im plattenförmigen Halbzeug enthaltenen Füllstoffe können je nach anzustrebendem speziellen Einsatzzweck über einen weiten Bereich variiert werden. Zu den vorteilhaft bei der Herstellung des selbstverstärkten Halbzeugs einsetzbaren Füllstoffen gehören unter anderem Talk, Dolomit, natürliche Verwachsungen von Talk und Dolomit, Glimmer, Quarz, Chlorit, Aluminiumoxid, Aluminiumhydroxid, Tone, Siliciumdioxid, Silikate, Carbonate, Phosphate, Sulfate, Sulfide, Oxide, Metalloxide, Glasmehl, Glaskugeln, Keramik, Kaolin, Porzellan, Cristobalit, Feldspalt, Kreide, Kohlenstoff und/oder mit inertem Gas gefüllte hohle Mikropartikel.

Grundsätzlich sind auch silanisierte Typen von Füllstoffen bevorzugt, da durch die Silanisierung eine bessere Matrixhaftung erreichbar ist, verglichen mit Füllstoffen, die nicht silanisiert sind.

Besonderes Interesse unter den Füllstoffsorten genießen Mineralien die Glimmer (mica), Chlorit (chlorite), Quarz (quartz) aufweisen, wie etwa ® Plastorit-Typen der Firma Naintsch, Verwachsungen von Talk mit Dolomit, insbesondere Verwachsungen von weißem Talk mit reinem Dolomit, BC-Microtypen der Firma Naintsch, ® DORSILIT-Kristallquarzmehl der Firma Dorfner, ® SIL-CELL mikrozellulare Additivkombinationen der Firma Stauss, St. Pölten, ^{™}Scotchlite Mikro-Glashohlkugeln der Firma 3M, ^{™}Dualite Polymer-Mikrohohlkugeln der Firma Pierce & Stevens Corp., ® Extendospheres XOL Hollow Microspheres der Firma The PQ Corporation und ® Apyral-Typen (Aluminiumhydroxide) der Firma Nabaltec.

Im Bezug auf Mikropartikel sind eine ganze Reihe von solchen Mikropartikeln einsetzbar. Grundsätzlich handelt es sich um hohle Partikel, die regelmäßig oder unregelmäßig sein können, die jedoch bevorzugt kugelförmig oder sphärisch sind und in ihrem Hohlraum inertes Gas aufweisen.

Zu den verwendbaren Mikrohohlkugeln zählen grundsätzlich Mikrohohlkugeln aus unterschiedlichen Materialien, wie z.B. Glas, Metallen, Metalloxiden, Polymeren und organischen Verbindungen.

Bevorzugt werden für die Erfindung Mikrohohlkugeln aus Kunststoff eingesetzt, die aus Polymeren bestehen, wie z.B. Polystyrol, Polyvinylchlorid, Polyvinylidenchlorid, Polyvinylacetat, Polyacrylat, Polyacrylnitril, Polybutadien, Polyethylenterephthalat; desweiteren bevorzugt sind auch Mikrohohlkugeln aus Copolymeren oder Terpolymeren, welche auf solchen Monomeren basieren, die die genannten Copolymeren ausbilden.

Beispiele für solche Polymere und Copoymere, welche die Hohlkugeln selbst bilden, sind unter anderem Vinylidenchlorid-Acrylnitrilcopolymer, Polyvinylidenchlorid, Acrylnitrilvinylidenchloridcopolymer, Acrylnitrilmethacrylonitrilcopolymer, Acrylnitrildivinylbenzol-vinylidenchloridcopolymer u. dgl.

Im Rahmen der Erfindung lassen sich bevorzugt auch Mischungen von Mikrohohlkugeln einsetzen.

Die gemäß der Erfindung einsetzbaren Mikrohohlkugeln oder Mikropartikel können zur Anpassung der Verarbeitungseigenschaften oder zur Variation der Verstärkungseigenschaften mit Überzügen beschichtet sein.

Besonders geeignet sind auch Abwandlungen von den einfachen Mikrohohlkugeln. Beispielsweise sind solche Mikrohohlkugeln von besonderem Interesse, die aus Polymeren bestehen, welche mit mineralischen Stoffen überzogen (beschichtet) sind, um eine bessere Stabilität gegen den Einfluß des umgebenden Mediums zu gewährleisten.

Die Beschichtung der Mikrohohlkugeln kann aus feinstkörnigen Mineralstoffen wie z.B. Calciumcarbonat, Quarz, Glimmer, Aluminiumhydroxid, Cristobalit und dergleichen bestehen.

Besonders bevorzugt sind Mikrohohlkugeln, insbesondere solche aus Kunststoff, die mit Calciumcarbonat beschichtet sind.

Eine Übersicht zur Herstellung der Mikrohohlkugeln findet sich beispielsweise in Mat. Res. Soc. Symp. Proc. Vol. 372, 1995 Materials Research Society bei David L. Wilcox, Sr. und Morris Berg, Seiten 3 bis 13, und der darin zitierten Literatur.

Zu besonders geeigneten Typen von gasgefüllten Mikrohohlkugeln aus Kunststoff gehören unter anderem ® Dualite-Typen, z.B. ® Dualite M 6032, (Pierce & Stevens Corp.); ® Expancel-Typen, z.B. ® Expancel 642 WU, ® Ropaque-Typen, z.B. ® Ropaque OP 62 (Rohm and Haas Co.), Matsumoto Microsphere, z.B. Microsphere F-30E (Matsumoto Yushi Seiyaku Co. Ltd.) und dergleichen.

Die genannten Füllstoffsorten können unterschiedliche Morphologien aufweisen. Sie können sphärisch oder asphärisch sein, wobei faser- oder splitterförmige Füllstoffe weniger bevorzugt sind. Vorteilhafte selbstverstärkende Halbzeuge mit besonders guten Eigenschaftskombinationen werden dann erhalten, wenn die enthaltenen verstärkenden Füllstoffe eine plättchenartige oder nadelartige Form aufweisen. Kugelförmige und insbesonders plättchenförmige oder nadelartige Füllstoffe ermöglichen bei der Formung des Halbzeugs zu Sanitärartikeln, beispielsweise durch Hochleistungsverformungsverfahren wie Tiefziehen des Halbzeugs, eine Ausrichtung der Partikel längs der Flußrichtung des unter Einfluß von Temperatur und/oder Druck fließenden Kunststoffmaterials. Diese Orientierung der verstärkenden Füllstoffpartikel, bevorzugt parallel zur Oberfläche des plattenförmigen Halbzeugs, kann für ein ausgewogenes Steifigkeits- Schlagzähigkeitsverhältnis beim durch Formung resultierenden Sanitärartikel sorgen, ermöglicht eine gute Oberflächenqualität des Sanitärartikels, sorgt für eine ausreichende Fließnahtfestigkeit, kann die Wärmeformbeständigkeit verbessern und übt im allgemeinen einen positiven Einfluß auf die Haptik der fertigen Sanitärartikel aus.

Eine besondere Ausführungsform des erfindungsgemäß resultierenden Halbzeugs liegt dann vor, wenn die eingesetzten Füllstoffpartikel Schichtfüllstoffe sind. Hierunter werden im Sinne der Erfindung solche Füllstoffe verstanden, die eine Vorzugs-Orientierung beim Fließvorgang (Formung des thermoplastisch formbaren Halbzeugs) einnehmen können.

Auch die Größe der Füllstoffpartikel kann eine Rolle für die Qualität des erfindungsgemäßen Halbzeugs spielen. So kann durch eine geeignete Größe der Füllstoffe die Steifigkeit des Halbzeugs und damit des resultierenden Sanitärartikels gesteuert werden. Die verstärkenden Füllstoffe werden allgemein im Korngrößenbereich von etwa 0,01 bis etwa 100 µm eingesetzt. Zweckmäßig ist die mittlere Partikelgröße des eingesetzten Füllstoffs im Bereich von 0,01 bis 80 µm, insbesondere im Bereich von 0,05 bis 30 µm, ganz besonders zweckmäßig im Bereich von 0,1 bis 20 µm.

Je feiner die eingesetzten verstärkenden Füllstoffe sind um so höher sind Steifigkeit und Schlagfestigkeit des Sanitärartikels. Bei größeren Füllstoffen werden die resultierenden Halbzeuge spröder. Besonders vorteilhafte Halbzeuge sind gemäß der Erfindung dadurch gekennzeichnet, daß der Rückstand der eingesetzten Füllstoffe bei einer 20 µm Siebung weniger als zwei Gewichtsprozent ist.

Grundsätzlich können alle Lagen oder Schichten der Poly(meth)acrylatplatte der Erfindung verstärkende Füllstoffe enthalten, wobei jedoch der Gehalt, wie zuvor genannt, unterschiedlich sein muß. Hierbei können die einzelnen Schichten gleiche oder unterschiedliche Füllstoffe aufweisen.

Vorzugsweise werden unter den Bedingungen der Depolymerisation der (Meth)acrylate inerte(n) Füllstoff(e) eingesetzt. Dabei versteht es sich, daß die Schicht mit niedrigem Füllstoffgehalt andere Füllstoffe aufweisen kann als die mit hohem Füllstoffgehalt, daß also Art und Menge der Füllstoffe im angegebenen Rahmen voneinander unabhängig sind.

Hierbei werden in Bezug auf die Erfindung unter Füllstoffen, die unter den Bedingungen der Depolymerisation der (Meth)acrylate inert sind, solche Substanzen verstanden, die die Depolymerisation von Acrylatpolymeren nicht wesentlich nachteilig beeinflussen oder gar unmöglich machen. Diese Eigenschaft der Füllstoffe ermöglicht ein einfaches Recycling der aus den Poly(meth)acrylatplatten herstellbaren Formkörper, wie beispielsweise Badewannen.

Die Dicke der Poly(meth)acrylatplatte und somit der einzelnen Schichten ist unter anderem vom Einsatzzweck abhängig. Einerseits können dünne Poly(meth)acrylatplatten als Halbzeuge besonders einfach verarbeitet werden und weisen durch Materialersparnis bedingte Kostenvorteile auf, andererseits nimmt die Stabilität der Platte mit der Dicke zu, so daß keine beschränkenden Angaben zur Dicke der Platte und somit der einzelnen Schichten getroffen werden können. Wenn die Platte zwei Schichten umfaßt liegt die Dicke der beiden Schichten jeweils im Bereich von 0,5 bis 10 mm, vorzugsweise im Bereich von 1 bis 7,5 mm.

Eine besondere selbstverstärkte, thermoplastisch formbare Platte gemäß der Erfindung ist dadurch gekennzeichnet, daß die Dicke der Schicht mit niedrigerem Füllstoffgehalt im Bereich von 2 bis 4 mm, insbesondere im Bereich von 2,5 bis 3,5 mm liegt, während die Dicke der Schicht mit höherem Füllstoffgehalt im Bereich von 3 bis 8 mm, vorzugsweise 4 bis 6 mm liegt.

Die erfindungsgemäße Polyacrylatplatte weist mindestens zwei Schichten mit unterschiedlichem Füllstoffgehalt auf. Dies bedeutet, daß die Polyacrylatplatte beispielsweise auch drei, vier oder fünf Schichten umfassen kann, die unterschiedliche Flexibilitäts-, Festigkeits- und Oberflächeneigenschaften haben können.

Damit aus einer Poly(meth)acrylatplatte auf eine an sich bekannte Weise eine Badewanne durch Formgebungsverfahren, wie beispielsweise das Warmformen, auch Tiefziehen genannt, erhalten werden kann, ist es erfindungsgemäß notwendig, daß die rheologischen Eigenschaften der Platte bestimmte Anforderungen erfüllen.

Überraschend wurde durch umfangreiche Versuche festgestellt, daß das Verhältnis von Reißdehnung der Schicht mit höherem Füllstoffgehalt zu Reißdehnung der Schicht mit niedrigerem Füllstoffgehalt kleiner als 1,5, vorzugsweise kleiner als 1 sein muß, damit aus einem Halbzeug (Poly(meth)acrylatplatte) durch Tiefziehen Duschtassen oder Badewannen erhalten werden können. Vorzugsweise liegt das Verhältnis von Reißdehnung der Schicht mit höherem Füllstoffgehalt zu Reißdehnung der Schicht mit niedrigerem Füllstoffgehalt im Bereich von 0,8 bis 0,1 und ganz besonders bevorzugt im Bereich von 0,6 bis 0,1. Die Reißdehnung wird dabei nach DIN EN ISO 527-2 (Kraftaufnehmer 1kN, Vorkraft 0,05 MPa, Geschwindigkeit 50 mm/min, Haltezeit bei Vorkraft 12 min, Prüfgeschwindigkeit 500 mm/min, Prüftemperatur 190 °C, Konditionierung: 16h Normalklima, bestimmt.

Die Reißdehnung ist ein komplexer Parameter, der von vielen Faktoren abhängt. Hierzu gehören unter anderem die Temperatur aber auch die Prüfgeschindigkeit, bei der dieser Parameter bestimmt wird.

Wie erwähnt müssen die Reißdehnungen, d.h. das Verhältnis der Reißdehnungen der mindestens zwei Schichten in den genannten Bereichen liegen. Der Einfluß der Füllstoffe auf diese Eigenschaft kann jedoch nicht durch eine allgemein gültige Formel beschrieben werden. Zur Einstellung der Reißdehnung ist es jedoch möglich, Zusatzstoffe zu verwenden, wie beispielsweise Gleitmittel, um die Fließfähigkeit zu erhöhen, oder Polymere mit sehr hohem Molekulargewicht, um diese zu verringern. Darüber hinaus ist es weiterhin möglich durch Versuche den Einfluß der Füllstoffe auf die Schmelzviskosität zu bestimmen und durch Mischen von Füllstoffen in einem geeigneten Verhältnis die Reißdehnung auf einen erwünschten Wert einzustellen. Als Anhaltspunkte für den Fachmann können insbesondere die nachfolgend aufgeführten Beispiele dienen.

Die Reißdehnung der Schicht mit höherem Füllstoffgehalt liegt zweckmäßig im Bereich von 50 bis 450 %, vorzugsweise im Bereich von 100 bis 300 % und besonders bevorzugt zwischen 100 und 200 %.

Eine Schicht mit niedrigerem Füllstoffgehalt verfügt bevorzugt über eine Reißdehnung im Bereich von 300 bis 1500 %, zweckmäßig im Bereich von 600 bis 1200 % und besonders zweckmäßig liegt die Reißdehnung einer solchen Schicht zwischen 700 und 1100 %.

Die resultierenden selbstverstärkten Poly(meth)acrylat-Platten haben im allgemeinen Reißdehnungen im Bereich von 150 bis 900 %, bevorzugt im Bereich von 200 bis 600 % und besonders günstigt im Bereich von 300 % und mehr.

Die einzelnen Schichten können unter anderem durch Extrusionsverfahren oder durch Gießverfahren erhalten werden. Beide Verfahren sind literaturbekannt (vgl. Ullmann's Encyclopedia of Industrial Chemistry, Fifth Edition auf CD-ROM, Ausgabe 1998, Stichwort "Polymethacrylats").

Eine bevorzugt Ausführungsform einer Schicht mit niedrigem Füllstoffgehalt kann durch die Polymerisation eines (Meth)acrylat-Systems erhalten werden,
welches enthält:
A)

| | | | |
|---|---|---|---|
| a) | (Meth)acrylat | | 30 - 100 Gew.-% |
| | a1) | Methyl(meth)acrylat | 0 - 99,99 Gew.-% |
| | a2) | C₂-C₄ (Meth)acrylat | 0 - 99,99 Gew.-% |
| | a3) | ≥ C₅ (Meth)acrylat | 0 - 50 Gew.-% |
| | a4) | mehrwertige (Meth)acrylate | 0,01 - 50 Gew.-% |
| | a5) | Urethan(meth)acrylate | 0 - 50 Gew.-% |
| b) | Comonomere | | 0 - 70 Gew.-% |
| | b1) | Vinylaromaten | 0 - 35 Gew.-% |
| | b2) | Vinylester | 0 - 35 Gew.-%, |

wobei die Komponenten a1) bis a5) so ausgewählt sind, daß sie 30 bis 100 Gew.-% a) ergeben und die Komponenten b1) bis b2) so gewählt sind, daß sie 0 bis 70 Gew.-% b) ergeben, während a) und b) zusammen 100 Gewichtsprozent der Komponente A) ergeben,
B) auf 1 Gew.-Teil A) 0 - 12 Gew.-Teile eines in A) löslichen oder quellbaren (Pre)polymers
C) Initiator in einer Menge ausreichend zur Härtung der Komponente A)
D) gegebenenfalls Mittel zur Einstellung der Viskosität des Systems,
E) übliche Additive in einer Menge von bis zu 3 Gewichtsteilen auf 1 Gewichtsteil A)
F) weniger als 0,25 Gew.-Teile verstärkend wirkende Füllstoffe auf 1 Gew.-Teil der Summe aus A) bis E). Wohingegen eine Schicht mit hohem Füllstoffgehalt durch die Polymerisation eines (Meth)acrylat-Systems erhalten werden kann,
welches enthält:
A)

| | | | |
|---|---|---|---|
| a) | (Meth)acrylat | | 50 - 100 Gew.-% |
| | a1) | Methyl(meth)acrylat | 0 - 100 Gew.-% |
| | a2) | C₂-C₄ (Meth)acrylat | 0 - 99,99 Gew.-% |
| | a3) | ≥ C₅ (Meth)acrylat | 0 - 99,99 Gew.-% |
| | a4) | mehrwertige (Meth)acrylate | 0 - 50 Gew.-% |
| | a5) | Urethan(meth)acrylate | 0,01 - 50 Gew.-% |
| b) | Comonomere | | 0 - 50 Gew.-% |
| | b1) | Vinylaromaten | 0 - 35 Gew.-% |
| | b2) | Vinylester | 0 - 35 Gew.-%, |

wobei die Komponenten a) bis b) so gewählt sind, daß sie zusammen 100 Gewichtsprozent ergeben, während a1) bis a5) zusammen 50 bis 100 Gew.-% und b1) und b2) zusammen 0 bis 50 Gewichtsprozent ausmachen,
B) auf 1 Gew.-Teil A) 0 - 12 Gew.-Teile eines in A) löslichen oder quellbaren (Pre)polymers
C) Initiator in einer Menge ausreichend zur Härtung der Komponente A)
D) gegebenenfalls Mittel zur Einstellung der Viskosität des Systems,
E) 0,25 bis 4 Gew.-Teile verstärkend wirkende Füllstoffe auf 1 Gew.-Teil der Summe aus A) bis E) (Bindemittel).

Die Komponente A) ist essentieller Bestandteil des zu polymerisierenden (Meth)acrylat-Systems.

Ein in Klammern gesetzter Bestandteil steht für dessen optionale Verwendbarkeit, d. h. (Meth)acrylat steht für Acrylat und/oder Methacrylat.

Die Monomerkomponente A) enthält bei Schichten mit niedrigerem Füllstoffgehalt zumindest 30 Gew.-% bei Schichten mit höherem Füllstoffgehalt zumindest 50 Gew.-% (Meth)acrylat, wobei einwertige (Meth)acrylate mit einem C₁-C₄-Esterrest bevorzugt sind. Längerkettige Ester, d. h. solche mit einem C₅- oder längerkettigem Esterrest sind auf 50 Gew.-% in der Komponente A) beschränkt. Bevorzugt Enthält die Komponente A) zumindest 40 Gewichtsprozent Methylmethacrylat.

Die langkettigen (Meth)acrylate machen in der angegebenen Menge das System schlagzäher. Damit machen diese Ester das Halbzeug zwar flexibler, aber auch weicher, wodurch die Gebrauchseigenschaften bei Mengen über 50 Gew.-% eingeschränkt würden.

Neben den (Meth)acrylaten kann die Komponente A) auch andere Comonomere enthalten, wobei deren Anteil auf 70 beziehungsweise 50 Gew.-% beschränkt ist. Unter diesen Comonomeren können Vinylaromaten und/oder Vinylester zu jeweils bis zu 35 beziehungswiese 50 Gew.-% in der Komponente A) enthalten sein. Höhere Anteile an Vinylaromaten lassen sich schwer einpolymerisieren und können zu einer Entmischung des Systems führen. Höhere Anteile an Vinylester können weiterhin bei tiefen Temperaturen nur ungenügend durchhärten und neigen zu einem größeren Schrumpfverhalten.

Vorzugsweise ist die Komponente A) zu 80 - 100 Gew.-% und besonders bevorzugt zu 90 - 100 Gew.-% aus (Meth)acrylaten aufgebaut, da sich mit diesen Monomeren Halbzeuge mit für Sanitärartikel günstigen Verarbeitungs- und Gebrauchseigenschaften erreichen lassen. Der Anteil an C₂-C₄-Estern in (Meth)acrylaten ist vorzugsweise auf 50 Gew.-% in der Komponente A) beschränkt, bevorzugt sind diese Ester zu max. 30 Gew.-% und besonders vorteilhaft zu max. 20 Gew.-% in der Komponente A) enthalten. Hierdurch lassen sich besonders flexible Schichten aufbauen.

Geeignete monofunktionelle (Meth)acrylate sind insbesondere Methylmethacrylat, Butylmethacrylat, Butylacrylat, 2-Ethylhexylacrylat, Ethyltriglykolmethacrylat, Hydroxypropylmethacrylat.

Als Comonomere eignen sich insbesondere Vinyltoluol, Styrol, Vinylester.

Vorzugsweise ist Styrol auf max. 20 Gew.-% in A) beschränkt, da ein höherer Gehalt zu Störungen bei der Polymerisation führen kann.

Essentiell sind in der Komponente A) auch mehrwertige (Meth)acrylate in einer Menge von 0,01 bis 50 Gew.-% enthalten. Die mehrwertigen (Meth)acrylate tragen durch ihre vernetzende Wirkung bei der Polymerisation unter anderem zur Verminderung der Wasseraufnahme des Halbzeugs und damit des letztlich resultierenden Sanitärartikels bei. Vorzugsweise sind mehrwertige (Meth)acrylate im (Meth)acrylatsystem in der Komponente A) in einer Menge von 0,1 - 30 Gew.-%, besonders zweckmäßig in einer Menge von 0,2 - 5 Gew.-%, enthalten. Die polyfunktionellen (mehrwertigen) (Meth)acrylate dienen zur Polymerverknüpfung zwischen linearen Molekülen. Dadurch können Eigenschaften wie Flexibilität, Kratzfestigkeit, Glasumwandlungstemperatur, Schmelzpunkt oder Härtungsabläufe beeinflußt werden.

Zu vorzugsweise einsetzbaren mehrfachfunktionellen (Meth)acrylaten gehören unter anderem:

### (1) Difunktionelle (Meth)acrylate

Verbindungen der allgemeinen Formel: 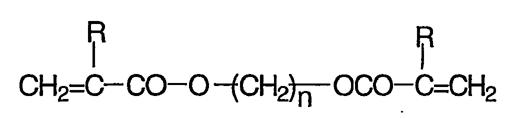 worin R Wasserstoff oder Methyl ist und n eine positive ganze Zahl zwischen 3 und 20, wie z. B. Di(meth)acrylat des Propandiols, Butandiols, Hexandiols, Octandiols, Nonandiols, Decandiols und Eicosandiols, Verbindungen der allgemeinen Formel: 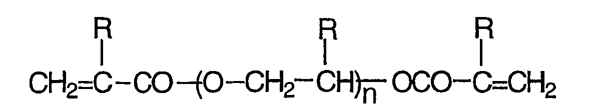 worin R Wasserstoff oder Methyl ist und n eine positive ganze Zahl zwischen 1 und 14, wie z. B. Di(meth)acrylat des Ethylenglycols, Diethylenglycols, Triethylenglycols, Tetraethylenglycols, Dodecaethylenglycols, Tetradecaethylenglycols, Propylenglycols, Dipropylenglycols und Tetradecapropylenglycols; und Glycerindi(meth)acrylat, 2,2'-Bis[p-(γ-methacryloxy-β-hydroxypropoxy)-phenylpropan] oder Bis-GMA, Biphenol-A-dimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2-hydroxypropoxy)butan.

### (2) Tri- oder mehrfachfunktionelle (Meth)acrylate

### Trimethylolpropantri(meth)acrylate und Pentaerythritoltetra(meth)acrylat.

Bevorzugte übliche polyfunktionelle (Meth)acrylate umfaßen neben anderen Triethylenglykoldimethacrylat (TEDMA), Trimethylolpropantrimethacrylat (TRIM), 1,4-Butandioldimethacrylat (1,4-BDMA), Ethylenglykoldimethacrylat (EDMA).

Weitere bevorzugte Komponenten eines erfindungsgemäß einzusetzenden (Meth)acrylatsystems sind mehrwertige (mindestens zweifachfunktionelle) Urethan(meth)acrylate.

Diese sind beispielsweise auf herkömmliche weitläufig bekannte Weise erhältlich aus isocyanatfunktionellen Vorpolymeren, in welche mittels hydroxyfunktionellen Verbindungen, wie z. B. Hydroxyethylacrylat, Hydroxyethylmethacrylat, Alkylalkohol, Vinylalkohol usw., olefinische Doppelbindungen eingeführt werden.

Ganz besonders zweckmäßige Schichten werden bei Einsatz von Urethan(meth)acrylaten erhalten, die mindestens drei reaktive endständige ethylenisch ungesättigten Funktionalitäten aufweisen, die von (Meth)acrylaten abgeleitet sind. Sie sind beispielsweise durch die Umsetzung von Hydroxyalkyl(meth)acrylsäureestern mit Polyisocyanaten und Polyoxyalkylenen, die mindestens drei Hydoxyfunktionalitäten aufweisen, erhältlich, wobei der Anteil an Polyethylenoxid kleiner als 50 Gew.-% ist, bezogen auf die Gesamtmenge an Polyoxyalkylen.

Durch Wahl des Anteils an Polyisocyanaten mit 3 oder mehr Isocyanat-Gruppen läßt sich das Eigenschaftsspektrum von Reißdehnung und Reißfestigkeit gezielt beeinflußen. Je höher der Anteil an Verbindungen mit drei oder mehr Funktionalitäten ist, desto größer wird die Reißfestigkeit. Hierbei nimmt allerdings die Reißdehnung stark ab.

Bevorzugt sind Verbindungen, deren Isocyanatgruppen unterschiedliche Reaktivitäten aufweisen. Diese Eigenschaft erleichtert die Reaktionsführung, ohne daß hierdurch eine Beschränkung erfolgen soll. Ein Beispiel für ein solch bevorzugtes Polyisocyanat ist Isophorondiisocyanat, respektive davon durch entsprechende Umsetzungen ableitbare Urethan(meth)acrylate.

Besonders bevorzugte Urethan(meth)acrylate für die vorliegende Erfindung weisen drei oder vier reaktive endständige ethylenisch ungesättigte Funktionalitäten auf.

Die für die Erfindung bevorzugten Urethan(meth)acrylate lassen sich durch Verfahren herstellen, bei denen man
i) mindestens ein Hydroxyalkyl(meth)acrylsäureester mit
ii) mindestens einem Polyisocyanat und
iii) mindestens einem Polyoxyalkylen
umsetzt.

Hierbei sind verschiedene Reaktionen denkbar. So können Urethan(meth)acrylate für die vorliegende Erfindung in einer zweistufigen Synthese hergestellt werden. Hierbei werden beispielsweise äquimolare Mengen Hydroxyalkyl(meth)acrylsäureester und Polyisocyanat umsetzt, wonach man das so erhaltene Reaktionsprodukt mit einem geeigneten Menge Polyoxyalkylen reagieren läßt. Bei Wahl geeigneter Polyisocyanate oder durch eine geeignete Reaktionsführung lassen sich so insbesondere Urethan(meth)acrylate mit drei reaktiven endständigen ethylenisch ungesättigten Funktionalitäten erhalten.

Es ist des weiteren denkbar die Umsetzung in einem Schritt durchzuführen. Hierbei entsteht ein Gemisch aus Urethan(meth)acrylaten mit einer unterschiedlichen Anzahl an ethylenisch ungesättigten Funktionalitäten. Es hat sich gezeigt, daß bei Verwendung von trifunktionalen Polyoxyalkylenen häufig tetrafunktionale Urethan(meth)acrylate mit Verbindungsgruppen der Formel (A.V) entstehen, wie diese weiter oben beispielhaft dargestellt sind. Die so erhaltenen Gemische können als Zusatzstoff in den (Meth)acrylatharzen ohne weitere Aufreinigung eingesetzt werden.

Die Komponente B) ist eine optionale Komponente, die jedoch sehr bevorzugt eingesetzt wird.

Grundsätzlich kann man bei der Bereitstellung von B) auf zwei voneinander verschiedene Weisen vorgehen. Zum einen kann man B) als polymere Substanz mit A) mischen. Zum anderen kann man A) vorpolymersieren, wobei man einen sogenannten Sirup erhält. Dieser Sirup weist dann bereits monomere Bestandteile aus der Gruppe A) und polymere Bestandteile aus der Gruppe B) in Mischung miteinander auf.

Zur Einstellung der Viskosität des Harzes und der gesamten Rheologie des Systems sowie der besseren Durchhärtung kann - wie ausgeführt - der Komponente A) ein Polymer oder Prepolymer B) zugegeben werden. Dieses (Pre)polymer soll in A) löslich oder quellbar sein. Auf einen Teil A) werden 0 bis 12 Teile des Prepolymers B) eingesetzt. Geeignet sind insbesondere Poly(meth)acrylate, wobei diese als festes Polymerisat in A) gelöst oder als sogenannte Sirupe, d. h. teilweise polymerisierte Mischungen entsprechender Monomere, eingesetzt werden können. Weiterhin sind Polyvinylchlorid, Polyvinylacetat, Polystyrol, Epoxydharze, Epoxy(meth)acrylate, ungesättigte Polyester, Polyurethane oder Mischungen hiervon geeignet. Diese Polymere bewirken z. B. spezielle Flexibilitätseigenschaften, Schrumpfregulierung, wirken als Stabilisator oder Verlaufsverbesserer.

Bevorzugt werden 2 bis 11 Teile B) auf 1 Teil A) eingesetzt. Besonders zweckmäßig sind 4 bis 10 Teile B) auf 1 Teil A). Ganz besonders bevorzugt nimmt man 6 bis 9 Teile eines (Pre)polymers und mischt sie mit einem Teil polymerisierbaren Monomeren A). Vorzugsweise wird das (Pre)polymer B) in A) gelöst.

In bevorzugter Ausführungsform ist das Gewichtsverhältnis der Komponenten B) und A) des Bindemittels im Bereich von 1 : 1 bis 12 : 1. In diesem Bereich lässt sich eine optimale Abstimmung der Eigenschaften erreichen.

Besonders zweckmäßig sind Gewichtsverhältnisse B) : A) im Bereich von 5 : 1 bis 12 : 1.

Die Komponente B) ((Pre)polymer) kann ein beliebiges Polymerisat sein. Besonders zweckmäßig handelt es sich um ein Suspensionspolymerisat, Emulsionspolymerisat und/oder Mahlgranulat aus Recyclingprozessen. Der mittlere Teilchendurchmesser der (Pre)polymere liegt dann üblicherweise bei < 0,8 mm.

Beim Prepolymer B) handelt es sich ganz vorteilhaft um eine durch Suspensionspolymerisation erhältliche PMMA-Lackperle. Diese kann Schichten mit insbesonders auch ausreichender Schlagzähigkeit resultierender Formkörper möglich machen.

Der mittlere Teilchendurchmesser der Lackperle beträgt dabei etwa 0,1 -0,8 mm. Bevorzugt sind 0,2 - 0,8 mm, insbesondere 0,4 - 0,8 mm.

Beim (Pre)polymer B) handelt es sich bevorzugt um ein Copolymer, wobei sich Härte und Flexibilität der Verstärkungsschichten durch Art und Menge des Comonomeren im (Pre)polymer B) beeinflussen lassen. Zu einsetzbaren Comonomeren, welche am Aufbau des jeweiligen (Pre)polymeren B) beteiligt sind, gehören u. a. Acrylate und Methacrylate, die von Methylmethacrylat (MMA) verschieden sind, Vinylester, Vinylchlorid, Vinylidenchlorid, Styrol, α-Methylstyrol und die verschiedenen halogensubstituierten Styrole, Vinyl-und Isopropenylether, Diene, wie beispielsweise 1,3-Butadien und Divinylbenzol.

Bevorzugte Comonomere sind für Methylacrylat u. a., Ethylacrylat, Butylacrylat, 2-Ethylhexylacrylat, Ethylmethacrylat, n-Butylmethacrylat, i-Butylmethacrylat, 2-Ethylhexylmethacrylat, Propylacrylat, Propylmethacrylat, Methacrylsäure, Ethyltriglykolmethacrylat, Hydroxypropylmethacrylat.

Die Komponente C) ist eine essentielle Komponente, die zur Härtung (Polymerisation) des polymerisierbaren Systems unerläßlich ist.

Die Polymerisation kann radikalisch sowie ionisch erfolgen, wobei die radikalische Polymerisation bevorzugt ist. Sie kann thermisch, durch Strahlen und durch Initiatoren erfolgen, wobei vorzugsweise Initiatoren verwendet werden, die Radikale bilden. Die jeweiligen Bedingungen der Polymerisation hängen von den gewählten Monomeren und dem Initiatorsystem ab und sind in der Fachwelt weithin bekannt.

Zu den bevorzugten Initiatoren gehören unter anderem die in der Fachwelt weithin bekannten Azoinitiatoren, wie AIBN bzw. 1,1-Azobiscyclohexancarbonitril, sowie Peroxyverbindungen, wie Methylethylketonperoxid, Acetylacetonperoxid, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoylperoxy)-2,5-dimethylhexan, tert.-Butylperoxy-2-ethylhexanoat, tert.-Butylperoxy-3,5,5-trimethylhexanoat, 1,1-Bis(tert.-butylperoxy)cyclohexan, 1,1-Bis (tert.-butylperoxy)3,3,5-trimethylcyclohexan, Cumylhydroperoxid, tert.-Butylhydroperoxid, Dicumylperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Es kommen ebenfalls Redoxsysteme in Frage, wobei auch phlegmatisierte Systeme in organischen Lösungsmitteln oder in wäßrigen Lösungen oder in wässriger Suspension bekannt und einsetzbar sind. Ein solches System ist unter der Marke ® Cadox von der Firma Akzo erhältlich.

Auch Mischungen mehrerer Initiatoren mit abgestufter Halbwertszeit sind möglich. Auf diese Weise läßt sich die Polymerisationsreaktion besser beherrschen, örtliche Unregelmäßigkeiten lassen sich vermeiden und es wird ein gleichmässigeres Ergebnis erhalten. Auch kann man dadurch die Nachpolymerisationszeit (Tempern des Halbzeugs in Thermoschränken) verkürzen.

Die Menge der Komponente C) ist in weiten Grenzen variabel. Sie richtet sich nach der Zusammensetzung der Monomeren, der Art und Menge des (Pre)polymeren sowie der gewünschten Polymerisationstemperatur und dem angestrebten Molekulargewicht des herzustellenden Polymers. Richtwerte ergeben sich etwa für Molekulargewichte von 10.000 bis 200.000 (Gewichtsmittel des Molekulargewichts) zu 2x10⁻⁵ bis etwa 1x10⁻⁴ Mol Initator pro Mol polymerisierbaren Bestandteilen des Monomersystems. Je nach Molekulargewicht der eingesetzten Initiatorverbindung(en) kommen pro Gewichtsteil der Komponente A) etwa 1x10⁻³ bis 5x10⁻⁵ Gewichtsteile der Komponente C) in Frage

Bei der Komponenten D) handelt es sich um einen optionalen Bestandteil des polymersierbaren (Meth)acrylat-Systems, der allerdings bevorzugt im System enthalten ist. Beispiele sind Emulgatoren. Bevorzugt sind Lecithine, z. B. Soja-Lecithin. Die Menge der einzusetzenden Substanzen kann über weite Bereiche varriiert werden. Bevorzugt sind 0,01 bis 1 Gewichtsteil D) auf 1 Gewichtsteil A). Besonders zweckmäßig sind 0,1 bis 0,2 Gewichtsteil D) auf 1 Gewichtsteil A).

Die Komponente E) ist optional. Es handelt sich hierbei um die üblichen Zusatzstoffe, die an sich bekannt sind, wobei beispielhafte Additive zuvor aufgeführt wurden. Zu E) sind vor allem auch solche Füllstoffe zu zählen, die nicht unter F) fallen. Hierzu gehören also nicht verstärkend wirkende Füllstoffe wie Farbpigmente, Antistatika, Antioxidantien, Entformungsmittel, Flammschutzmittel, Schmiermittel, Farbstoffe, Fließverbesserungsmittel, Lichtstabilisatoren und organische Phosphorverbindungen, wie Phosphite oder Phosphonate, Pigmente, Thixotropiermittel, UV-Schutzmittel, Verwitterrungsschutzmittel und Weichmacher.

Diese üblichen Additive sind vorzugsweise von kleinerer Partikelgröße als die Füllstoffe der Komponente F) es sind. Die mittlere Partikelgröße der gemäß E) eingesetzten Füllstoffe liegt vorzugsweise im Bereich von kleiner als 10 µm, zweckmäßig im Bereich von kleiner als 5 µm, besonders bevorzugt kleiner als 1 µm und ganz besonders bevorzugt kleiner als 0,01 µm. Das Verhältnis der mittleren Partikelgrößen der Füllstoffe E) zu F) ist zweckmäßig im Bereich von 1 : 3 bis 1 : 1000, vorzugsweise im Bereich von 1 : 5 bis 1 : 100 und besonders bevorzugt im Bereich von 1 : 10 bis 1 : 50.

Die Komponente F ist in der Schicht mit hohem Füllstoffgehalt essentiell, wohingegen die Schicht mit niedrigem Füllstoffgehalt keine Füllstoffe aufweisen muß. Darüber hinaus wurde diese Komponente zuvor ausführlich beschrieben.

Aus dem zuvor genannten wird deutlich, daß sich die Zusammensetzung der verschiedenen Schichten hinsichtlich den verwendeten Komponenten A) bis F) sowohl in der Art als auch in ihren Gewichtsanteilen stark unterscheiden kann. Während sich die Schicht mit niedrigem Füllstoffgehalt vor allem eine hervorragende Oberflächengüte, insbesondere Kratzfestigkeit und Haarrißbeständigkeit auszeichnen sollte, dient die Schicht mit hohem Füllstoffgehalt hauptsächlich zur Verstärkung, so daß die Komponenten der Schichten jeweils auf ihren Zweck hin optimiert werden können.

Die Schicht mit höherem Füllstoffgehalt wird zweckmäßigerweise in einem Gießverfahren erhalten. Hierbei kann man dergestalt vorgehen, daß man
a) eine polymerisierbare, gefüllte (Meth)acrylat-Zusammensetzung bereitstellt,
b) die bereitgestellte Zusammensetzung in eine vorbereitete Form gießt,
c) die Zusammensetzung in der Form bei einer Temperatur oberhalb Raumtemperatur unter Erhalt eines plattenartigen Halbzeugs polymerisiert und
d) das Halbzeug entformt.

Hierbei kann besonders zweckmäßig eine Abreicherung der verstärkenden Füllstoffe an der Oberfläche sowie eine Anreicherung der verstärkenden Füllstoffe an der Unterseite der Platte erreicht werden und zwar durch Ausnutzung der Viskosität des zum Erhalt des Halbzeugs zu polymerisierenden (Meth)acrylat-Systems. Vorzugsweise hat das (Meth)acrylat-System vor der Polymerisation eine Viskosität im Bereich von 0,02 bis 0,1 Pa·s (20 bis 100 cP), vorzugsweise 0,03 bis 0,08 Pa·s (30 bis 80 cP), besonders bevorzugt 0,04 bis 0,06 Pa·s (40 bis 60 cP), ganz besonders zweckmäßig etwa 0,05 Pa·s (50 cP). Bei Polymerisation der Platte im bevorzugten Viskositätsbereich gelingt es besonders gut, eine hochglänzende Oberfläche zu erzielen. Gleichzeitig kann dennoch eine Gleichverteilung von Pigmenten oder weiteren üblichen Füllstoffen erreicht werden, die sehr viel feiner sind als die verstärkenden Füllstoffe. So gelingt gemäß der Erfindung die Kombination von Farbe und hochglänzender Oberfläche mit einem ausreichenden Selbstverstärkungseffekt beim erfindungsgemäßen Sanitärartikel. Insbesondere kann die Schicht mit höherem Füllstoffgehalt somit auch eine gradientenartige Verteilung der verstärkenden Füllstoffeüber die Dicke der Schicht erhalten.

Die Viskosität kann auf verschiedene Art und Weise eingestellt werden. Eine erste zweckmäßige Verfahrenvariante der Erfindung kennzeichnet sich dadurch, daß man die Viskosität der polymerisierbaren Zusammensetzung durch Variation des Gewichtsverhältnisses von (Pre)polymer zu polymerisierbaren Monomeren in der Zusammensetzung reguliert.

Alternativ hierzu oder in Kombination damit kann es auch von Vorteil sein, daß man die Viskosität der Zusammensetzung durch Variation des Anteils an viskositätseinstellenden Mitteln reguliert. Solche die Viskosität einstellenden, d.h. regulierenden Mittel sind dem Fachmann an sich bekannt. Hierzu gehören beispielsweise ionische, nichtionische und zwitterionische Emulgatoren.

Besonders bevorzugte Abwandlungen des Verfahrens gemäß der Erfindung beinhalten, daß man als viskositätseinstellendes Mittel einen Emulgator, vorzugsweise ein oder mehrere Lecithine, einsetzt.

Weitere zweckmäßige Mittel oder Verfahren zur Beeinflußung und/oder Einstellung der Viskosität der polymerisierbaren Zusammensetzung umfaßen unter anderem folgende Maßnahmen:

Die Viskosität des Polymerisationssystems kann durch Reglerzusatz varriiert werden.

Es kann vorteilhaft sein, die Viskosität des Polymerisationssystems über das Mischungsverhältnis zwischen (Pre)polymer (Vorpolymerisat) und monomeren, polymerisierbaren Bestandteilen des Polymerisationssystems zu steuern.

Art und Menge von Netzmittelzusätzen, wie das angesprochene Lecithin oder auch ® Catafor und dergleichen, können die Einstellung der Viskosität auf den gewünschten Wert ermöglichen.

Die Füllstoffkonzentration als solche beeinflußt die Viskosität des Polymerisationssystems, ebenso wie die Art des Füllstoffs oder der Füllstoffmischung (Korngröße, Ölzahl, Oberflächenbehandlung).

Desweiteren können übliche Zusätze wie zum Beispiel Thixotropierungsmittel (beispielsweise ® Aerosile) die Viskosität des Polymerisationssystems verändern.

Desweiteren kann über die Polymerisationstemperatur Einfluß auf die Viskosität des Systems genommen werden.

Schließlich können auch die Initiatorkonzentration und die Kinetik der Polymerisationsreaktion einen Einfluß auf die Viskosität des Polymerisationssystems und damit den Sedimentationsgrad der Füllstoffe ausüben.

Die Schicht mit niedrigerem,Füllstoffgehalt kann wahlweise nach einem Gießverfahren oder durch Extrusion erhalten werden.

Die erfindungsgemäßen Polyacrylatplatten können damit beispielsweise dadurch erhalten werden, daß man mindestens eine Schicht mit höherem Füllstoffgehalt und eine Schicht mit geringerem Füllstoffgehalt auf geeignete Weise miteinander verbindet. Hierbei können die Schichten mit Klebstoff oder durch Verschmelzen verbunden werden. Diese Verfahren sind an sich bekannt.

Des weiteren ist es möglich, die erfindungsgemäße Poly(met) acrylatplatte dadurch zu erhalten, daß man die Schicht mit niedrigerem Füllstoffgehalt und die Schicht mit höherem Füllstoffgehalt coextrudiert.

Coextrusionsverfahren sind in der Fachwelt weithin bekannt.

Hierbei müssen jedoch die Formmassen an sich bekannte Eigenschaften, insbesondere hinsichtlich ihrer Rheologie, aufweisen. Dementsprechend ist sowohl die Molmasse der Polymere als auch die Menge und Art des einsetzbaren Füllstoffs begrenzt. Auch sind Extrusionsverfahren bislang sinnvoll nur bei unvernetzten Polymeren anwendbar. Vorteilhaft an diesem Verfahren ist jedoch seine Wirtschaftlichkeit.

Ein weiteres Verfahren zur Herstellung der erfindungsgemäßen Platten zeichnet sich dadurch aus, daß man die Schicht mit niedrigem Füllstoffgehalt auf die Schicht mit hohem Füllstoffgehalt oder die Schicht mit hohem Füllstoffgehalt auf die Schicht mit niedrigem Füllstoffgehalt polymerisiert.

Diese Polymerisation kann beispielsweise mit Hilfe des sogenannten Kammerverfahrens durchgeführt werden, wobei eine Poly(meth)acrylatschicht als Begrenzungsplatte der Kammer dient und die zweite Schicht durch Gießen und anschließende Substanzpolymerisation auf der ersten Schicht erhalten wird. Insofern ist es als besonders zweckmäßig anzusehen, daß man als Schicht mit höherem Füllstoffgehalt eine Platte einsetzt, die man im Kammerverfahren auf eine untere Formglasplattenseite der Kammer auflegt, wonach man zum Erhalt einer Schicht mit niedrigerem Füllstoffgehalt ein (Meth)acrylatsystem in die Kammer auf die eingelegte Platte mit höherem Füllstoffgehalt gießt und im Kammerverfahren aufpolymerisiert.

Gießverfahren, wie beispielsweise das Kammerverfahren oder der Rosteroprozeß zeichnen sich dadurch aus, daß ein (Meth)acrylat-System in eine Form gegossen und anschließend polymerisiert wird.

Aus der erfindungsgemäßen Poly(meth)acrylatplatte können Sanitärartikel durch an sich bekannte Umformverfahren erhalten werden. Hierzu gehören unter anderem Ziehen, Streckformen, Strecken, Ziehformen, Tiefziehen, Vakuumformen, Pultrusion. Hierbei sind Verfahren bevorzugt, bei denen die Platte über den elastoplastischen Zustand geformt wird. Besonders gut geeignet ist beispielsweise die Warmformtechnik, auch Tiefziehen, genannt.

Hierbei wird die Poly(meth)acrylatplatte am Formrand fest eingespannt, wonach man das Formteil aus dem erwärmten, freien Zuschnitt heraus durch Umformkräfte in eine gewünschte Form bringt. Als Umformkräfte kommen unter anderem Vakuum, Druckluft oder mechanische Kräfte, z.B. Vorstreckstempel oder Niederhalter, in Betracht, die einzeln oder in Kombination verwendet werden können. Bei dem Formprozeß nimmt die Wanddicke der Polyacrylatplatte ab.

Die Polyacrylatplatte wird hierbei vorzugsweise auf eine Temperatur im Bereich von 140 bis 210°C, besonders bevorzugt 170 bis 190°C erwärmt.

Dementsprechend weisen die Formvorrichtungen neben dem Formwerkzeug gewöhnlich auch ein Heizvorrichtung auf, welche die Platte beispielsweise durch Infrarotstrahlen, Luft oder durch Kontakt aufwärmt, wobei die Erwärmung durch Infrarot bevorzugt ist, da diese Methode die Platte gleichmäßig erhitzt.

Anschließend wird die erwärmte Platte in das Formwerkzeug gezogen. Dies erfolgt mit Hilfe der oben genannten Umformkräfte, wobei in den allermeisten Ausführungsformen von Warmformvorrichtungen der Bereich zwischen Platte und Form durch Vakuum entlüftet wird.

Unterschieden wird des weiteren zwischen dem Positiv- und dem Negativ-Formverfahren. Bei dem Positiv-Verfahren wird die Innenseite des Formkörpers exakt abgebildet, da diese Kontakt mit dem Formwerkzeug hat.

In dem erfindungsgemäßen Verfahren zur Herstellung des Sanitärartikels ist es daher bevorzugt, daß die Schicht mit dem höheren Füllstoffgehalt auf dem Formwerkzeug anliegt, wobei die Formgebung nach dem Positiv-Verfahren erfolgt.

Diese Formgebungstechnik ist an sich bekannt, wobei der Fachmann wertvolle Hinweise beispielsweise in Ullmann's Encyclopedia of Industrial Chemistry, Fifth Edition auf CD-ROM, Ausgabe 1998, Stichwort "Plastics Prozessing" oder in Kunststoff-Maschinen-Führer, Johannaber, 3. Ausgabe, Hanser-Verlag, 1992, Seiten 618 ff. findet.

### Beispiele:

### 1. Herstellung einer beispielhaften Schicht mit höherem Gehalt an verstärkenden Füllstoffen (Beispiel 1)

### 1.1. Formenbau

Zwei Sekuritglasplatten werden als Form verwendet. Zwischen den Formglasplatten wird eine Dichtschnur aus PVC gelegt. Die Glasplatten werden anschließend mit Hilfe von Klammern an drei Seiten fixiert. Die Breite der Kammer läßt sich durch verschiedene Dicken der Dichtungsschnur variieren. Im Beispielfall betrug die lichte Dicke der Kammer etwa 5 mm. Die vierte Seite wird nach erfolgter Befüllung verschlossen. Das so verschlossene Plattensystem wird waagrecht gelagert und in ein Wasserbad plaziert.

### 1.2. Poly(meth)acrylatsystem für die Befüllung der Form 1.1

| Nr. | Gewichtsteile | Substanz | Gruppe | Gewichts- % oder Teile (T.) |
|---|---|---|---|---|
| 7) | 0,08 | Vernetzer ^{2*} | A) | 0,18 % A) |
| 6) | 0,30 | Dimeres α-Methylstyrol | A) | 0,67 % A) |
| | | Vorpolymerisat ^{3*} | A) | 99,15 % A) |
| 1) | 49,205 | entspricht etwa 44,285 T. A) und 4,9205 T. B) | B) | 0,02 T. B) auf |
| | | | | 1 T. A) |
| 10) | 0,025 | Azovaleronitril | C) | |
| 5) | 0,3 | Soja Lecithin ^{5*} | D) | |
| 4) | 1,5 | Farbpaste ^{6*} | E) | |
| 8) | 0,05 | ®Tinuvin 770 ^{7*} | E) | |
| 9) | 0,04 | ®Aerosol OT ^{4*} | E) | |
| 3) | 48,5 | BC-Micro ^{1*} | F) | 1 T. F) auf |
| | | | | 1 T. Σ A) E) |

| | | | | |
|---|---|---|---|---|
| 1* Special Extender BC-Micro der Firma Naintsch, A-8045 Graz-Andritz, Austria, ist eine Verwachsung von weißem Talk mit reinem Dolomit und besteht gemäß chemischer Analyse aus 12 % SiO_{2,} 22 % MgO, 24 % CaO und weist einen Glühverlust bei 1h und 1050 °C von 40 % auf. Der Dolomitgehalt (Leco) beträgt 85 %. Bei einer Siebanalyse nach DIN 66165 ist der Rückstand 2,0 % auf 20 µm. | | | | |
| 2* Vernetzer steht für Triethylenglykoldimethacrylat (TEDMA). | | | | |
| 3* Vorpolymerisat ist ein auf MMA beruhender Sirup, worin Methylmethacrylat in bekannter Weise bis zu einem Umsatz von etwa 10 % (90 Gewichts % Restmonomer) vorpolymerisert wurde. Die Viskosität des Vorpolymerisats betrug etwa 450 cp. | | | | |
| 4* ® Aerosol OT ist ein Dioctylnatriumsulfosuccinat der Firma Cyanamid und wird als Trennmittel/Entformungsmittel verwendet. | | | | |
| 5* Soja Lecithin ist ein Produkt der Firma Stern Lecithin und Soja GmbH und wird als Benetzungsmittel für die eingesetzten Füllstoffe verwendet. | | | | |
| 6* Farbpaste ist eine Bezeichnung für eine Mischung im wesentlichen aus Titandioxid, Buntpigmenten und Dioctylphtalat (DOP). Die Mischung wird zur Einfärbung erfindungsgemäßer Platten verwendet. | | | | |
| 7* ® Tinuvin 770 ist Lichtstabilisator der Firma Ciba - Spezialitätenchemie GmbH und gehört zur Gruppe der HALS Produkte. | | | | |

### 1.3. Befüllung und Polymerisation in der Kammer

Die benötigten Füll- und Zusatzstoffe werden in ca. ein Drittel des benötigten Vorpolymerisats (1) eindispergiert. Hierbei wird zuerst ein Dispergierhilfsmittel und anschließend die benötigten Zusatzstoffe wie z. B. Regler, Vernetzer, Thermostabilisatoren, etc., sowie verstärkende Füllstoffe in den angegebenen Mengen zudosiert (7,6,5,8,2) .

Diese Lösung wird in einem kühl- und evakuierbaren Rührbehälter mindestens 30 min. dispergiert. Die Lösungstemperatur soll dabei 50°C nicht überschreiten. Nach der Dispergierung wird der Ansatz auf Raumtemperatur abgekühlt, mit der restlichen Menge Vorpolymerisat verdünnt und anschließend wird der Inititaor 10) in die Lösung eingerührt. Diese Lösung wird abschließend noch 30 min. unter Vakuum homogenisiert. Der beschriebene Ansatz wird in die Form gegossen; die befüllte Form wird horizontal in ein Wasserbad bei 62 °C gelagert, der Inhalt wird polymersiert. Bei der Hauptpolymerisation werden ca. 90 % Umsatz erreicht. Die Nachpolymerisation der Platten erfolgt in einem Temperofen bei 120 °C. Nach Abkühlen der Platten wird die obere Glasplatte der Kammer entfernt und das Halbzeug (Poly(meth)acrylatPlatte) entnommen.

### 2. Herstellung einer beispielhaften Schicht mit niedrigerem Gehalt an verstärkenden Füllstoffen (Beispiel 2)

### 2.1. Formenbau

wie bei 1.1. mit dem Unterschied, daß die lichte Dicke der Kammer etwa 3,2 mm betrug.

### 2.2. Poly(meth)acrylatsystem für die Befüllung der Form 2.1

| Nr. | Gewichtsteile | Substanz | Gruppe | Gewichts- % oder Teile (T.) |
|---|---|---|---|---|
| 7) | 0,08 | Vernetzer ^{2*} | A) | 0,091 % A) |
| 6) | 0,25 | Dimeres α-Methylstyrol | A) | 0,285 % A) |
| | | Vorpolymerisat ^{3*} | A) | 99,624 % A) |
| 1) | 97,035 | entspricht etwa 87,3315 T. A) und 9,7035 T. B) | B) | 0,02 T. B) auf |
| | | | | 1 T. A) |
| 10) | 0,045 | Azovaleronitril | C) | |
| 4) | 2,5 | Farbpaste ^{6*} | E) | |
| 8) | 0,05 | ®Tinuvin 770 ^{7*} | E) | |
| 9) | 0,04 | ®Aerosol OT ^{4*} | E) | |

### 2.3. Befüllung und Polymerisation in der Kammer

Die benötigten Zusatzstoffe (3-9) werden in den angegebenen Mengen im Vorpolymerisat (1) eindispergiert und 30 min unter Vakuum homogenisiert.

Der beschriebene Ansatz wird in die Form gegossen; die befüllte Form wird horizontal in ein Wasserbad bei 62 °C gelagert, der Inhalt wird polymersiert. Bei der Hauptpolymerisation werden ca. 90 % Umsatz erreicht. Die Nachpolymerisation der Platten erfolgt in einem Temeperofen bei 120 °C. Nach Abkühlen der Platten wird die obere Glasplatte der Kammer entfernt und das Halbzeug (Poly(meth)acrylat-Platte) entnommen.

### 3. Herstellung einer beispielhaften selbstverstärkten Poly(meth)acrylatplatte

### 3.1. Herstellung durch Aufpolymerisieren des Ansatzes aus Beispiel 2 auf die Platte aus Beispiel 1

Eine unter Beispiel 1 beschriebene Verstärkungsplatte wird beim Formenbau auf eine untere Formglasplattenseite aufgelegt.

Auf die Verstärkungsplatte wird im Anschluß ein unter 2.1. beschriebener Ansatz aufgegossen. Die aufzugießende Menge ist hierbei von der gewünschten Schichtdicke der Schicht mit niedrigerem Füllstoffgehalt abhängig. Es werden vorzugsweise Schichten von 1 bis 5 mm aufpolymersiert.Im Beispielfall 3.1 betrug die Dicke der aufpolymerisierten Schicht 3,2 mm. Die Haupt- und Nachpolymerisation erfolgt wie unter 1 hierin oben beschrieben.

### 3.2. Herstellung durch Aufpolymerisieren des Ansatzes aus Beispiel 1 auf die Platte aus Beispiel 2

Eine unter Beispiel 2 beschriebene Platte wird beim Formenbau auf eine Formglasseite aufgelegt. Der weitere Formenbau erfolgt wie bei 1. beschrieben.

Auf die Verstärkungsplatte wird im Anschluß ein unter 1.1. beschriebener Ansatz aufgegossen. Im Beispielfall 3.2 betrug die Dicke der aufpolymerisierten Schicht 5 mm. Die Haupt- und Nachpolymerisation erfolgt wie unter 1 hierin oben beschrieben.

### 3.3. Herstellung durch Laminieren einer Platte aus Beispiel 1 mit einer Platte aus Beispiel 2

Eine unter Beispiel 2 beschriebene Platte wird mit einer unter 1 beschriebenen Platte im Vakuumverfahren oder im Prepregverfahren laminiert.

Im ersten Fall wirkt durch Erzeugung eines Vakuums auf das gesamte Bauteil (Sandwich aus Platte gemäß 1 und 2 sowie gegebenenfalls ein Haftvermittler) ein gleichmäßiger Unterdruck. Eingeschlossene Luft und überschüßiges Klebeharz werden dem zu laminierenden Teil entzogen, wodurch ein erstklassiger Verbund der beiden Platten erreicht wird.

Bei der Prepregverarbeitung erfolgt die Laminierung im Autoklav oder unter einer Presse unter Wärme und Druckzufuhr.

### 3.4. Bestimmung der Reißdehnungen der Platten aus Beispiel 1 und 2 sowie des Laminats aus Beispiel 3.3.

Die Reißdehnungen wurden gemäß den hierin angegebenen Normen bestimmt.

Die Schicht mit höherem Füllstoffgehalt (Platte aus Beispiel 1) wies eine Reißdehnung von 144 % auf.

Die Schicht mit niedrigerem Füllstoffgehalt (Platte aus Beispiel 2) wies eine Reißdehnung von 950 % auf.

Das Laminat aus Platte gemäß Bsp.1 und Platte gemäß Bsp. 2 wies eine Reißdehnung von 333 % auf.

### 4. Hochleistungsverformung der Halbzeug-Platte gemäß 3.1

### 4.1. Das Halbzeug aus 3.1. hat eine Dicke von etwa 8,2 mm.

Ein etwa 0,9 x 0,9 m großes Halbzeug wird zu einer Duschtasse tiefgezogen. Dies geschieht folgendermaßen: Die zu verformende Platte wird in einem Metallrahmen fixiert. An der Ober- und Unterseite wird die Platte mit Infrarotstrahlern erwärmt, bis eine Oberflächentemperatur von ca. 190 °C erreicht ist. Anschließend werden die Infrarotstrahler entfernt und eine Form wird an die Unterseite der Platte herangeführt, so daß diese luftdicht mit der Platte abschließt. Mit Vakuum wird die erwärmte Platte in die Form gezogen. Nach dem Abkühlen kann der verformte Körper entnommen werden.

Die Duschtasse gemäß Beispiel erfüllte die Anforderungen der einschlägigen Normen. Insbesondere wurden folgende Untersuchungen beispielhaft an der Duschtasse gemäß Beispiel durchgeführt und bestanden:
1) Chemikalienbeständigkeit nach EN 249;
2) Beständigkeit gegen Temperaturwechsel gemäß EN 249;
3) Beständigkeit gegen Stoßbeanspruchung gemäß EN 249;
4) Durchbiegung gemäß EN 249 (verlangt: 2 mm) vorhanden 2 bis 4 mm.

## Patentansprüche

1. Selbstverstärkte, thermoplastisch formbare Platte aus Poly(meth)acrylat aufweisend mindestens zwei Schichten, die sich in ihrem Füllstoffgehalt unterscheiden, wobei der Füllstoffgehalt den prozentualen Anteil des Gewichts der verstärkend wirkenden Füllstoffe am Gesamtgewicht der jeweiligen Schicht angibt, **dadurch gekennzeichnet, daß** das Verhältnis von Reißdehnung der Schicht mit höherem Füllstoffgehalt zu Reißdehnung der Schicht mit niedrigerem Füllstoffgehalt kleiner ist als 1,5, wobei die Reißdehnung für die jeweilige Schicht nach DIN EN ISO 527-2 bestimmt wird.

2. Selbstverstärkte, thermoplastisch formbare Platte aus Poly(meth)acrylat gemäß Anspruch 1 zur Herstellung von Sanitärartikeln wie Badewannen und Duschtassen im Tiefzieverfahren, **dadurch gekennzeichnet, daß** das Verhältnis von Reißdehnung der Schicht mit höherem Füllstoffgehalt zu Reißdehnung der Schicht mit niedrigerem Füllstoffgehalt kleiner ist als 1,5, wobei die Reißdehnung für die jeweilige Schicht nach DIN EN ISO 527-2 bestimmt wird.

3. Selbstverstärkte, thermoplastisch formbare Platte gemäß Anspruch 1, **dadurch gekennzeichnet, daß** das Verhältnis von Reißdehnung der Schicht mit höherem Füllstoffgehalt zu Reißdehnung der Schicht mit niedrigerem Füllstoffgehalt im Bereich von 0,8 bis 0,1 liegt, wobei die Reißdehnung für die jeweilige Schicht nach DIN EN ISO 527-2 bestimmt wird.

4. Selbstverstärkte, thermoplastisch formbare Platte gemäß Anspruch 1, **dadurch gekennzeichnet, daß** das Verhältnis von Reißdehnung der Schicht mit höherem Füllstoffgehalt zu Reißdehnung der Schicht mit niedrigerem Füllstoffgehalt im Bereich von 0,6 bis 0,1 liegt, wobei die Reißdehnung für die jeweilige Schicht nach DIN EN ISO 527-2 bestimmt wird.

5. Selbstverstärkte, thermoplastisch formbare Platte gemäß Anspruch 1, **dadurch gekennzeichnet, daß** die Schicht mit niedrigerem Füllstoffgehalt frei von verstärkenden Füllstoffen ist.

6. Selbstverstärkte, thermoplastisch formbare Platte gemäß Anspruch 1, **dadurch gekennzeichnet, daß** das Verhältnis von Füllstoffgehalt der Schicht mit höherem Füllstoffgehalt zu Füllstoffgehalt der Schicht mit niedrigerem Füllstoffgehalt größer ist als 2.

7. Selbstverstärkte, thermoplastisch formbare Platte gemäß Anspruch 1, **dadurch gekennzeichnet, daß** das Verhältnis von Füllstoffgehalt der Schicht mit höherem Füllstoffgehalt zu Füllstoffgehalt der Schicht mit niedrigerem Füllstoffgehalt größer ist als 4.

8. Selbstverstärkte, thermoplastisch formbare Platte gemäß Anspruch 1, **dadurch gekennzeichnet, daß** das Verhältnis von Füllstoffgehalt der Schicht mit höherem Füllstoffgehalt zu Füllstoffgehalt der Schicht mit niedrigerem Füllstoffgehalt größer ist als 16.

9. Selbstverstärkte, thermoplastisch formbare Platte gemäß einem oder mehreren der vorhergehenden Ansprüche, **dadurch gekennzeichnet, daß** als verstärkend wirkende Füllstoffe ein oder mehrere Füllstoffe aus der Gruppe eingesetzt werden, die Talk, Dolomit, Glimmer, Quarz, natürliche Verwachsungen von Talk und Dolomit, Chlorit, Aluminiumoxid, Aluminiumhydroxid, Tone, Siliciumdioxid, Silikate, Carbonate, Phosphate, Sulfate, Sulfide. Metalloxide, Glasmehl, Glaskugeln, Keramik, Kaolin. Porzellan, Cristobalit, Feldspalt, Kreide, Kohlenstoff und/oder mit inertem Gas gefüllte hohle Mikropartikel umfaßt.

10. Selbstverstärkte, thermoplastisch formbare Platte gemäß einem oder mehreren der vorhergehenden Ansprüche, **dadurch gekennzeichnet, daß** die verstärkend wirkenden Füllstoffe eine kugelartige, sphärische und/oder plättchenartige Form aufweisen.

11. Selbstverstärkte, thermoplastisch formbare Platte gemäß einem oder mehreren der vorhergehenden Ansprüche, **dadurch gekennzeichnet, daß** die mittlere Partikelgröße des verstärkenden Füllstoffs im Bereich von 0,01 bis 80µm liegt.

12. Selbstverstärkte, thermoplastisch formbare Platte gemäß einem oder mehreren der vorhergehenden Ansprüche, **dadurch gekennzeichnet, daß** die mittlere Partikelgröße des verstärkenden Füllstoffs im Bereich von 0,05 bis 30µm.

13. Selbstverstärkte, thermoplastisch formbare Platte gemäß einem oder mehreren der vorhergehenden Ansprüche, **dadurch gekennzeichnet, daß** die Platte zwei Schichten mit unterschiedlichem Füllstoffgehalt umfaßt, deren Dicke jeweils im Bereich von 0,5 bis 10 mm liegt.

14. Selbstverstärkte, thermoplastisch formbare Platte gemäß einem oder mehreren der vorhergehenden Ansprüche, **dadurch gekennzeichnet, daß** die Platte zwei Schichten mit unterschiedlichem Füllstoffgehalt umfaßt, deren Dicke jeweils im Bereich von 1,5 bis 7 mm liegt.

15. Selbstverstärkte, thermoplastisch formbare Platte gemäß einem oder mehreren der vorhergehenden Ansprüche, **dadurch gekennzeichnet, daß** die Dicke der Schicht mit niedrigerem Füllstoffgehalt im Bereich von 2 bis 4 mm liegt, während die Dicke der Schicht mit höherem Füllstoffgehalt im Bereich von 3 bis 8 mm liegt.

16. Selbstverstärkte, thermoplastisch formbare Platte gemäß einem oder mehreren der vorhergehenden Ansprüche, **dadurch gekennzeichnet, daß** die Dicke der Schicht mit niedrigerem Füllstoffgehalt im Bereich von 2 bis 4 mm liegt, während die Dicke der Schicht mit höherem Füllstoffgehalt im Bereich von 4 bis 6 mm liegt.

17. Selbstverstärkte, thermoplastisch formbare Platte gemäß einem oder mehreren der vorhergehenden Ansprüche, **dadurch gekennzeichnet, daß** die Dicke der Schicht mit niedrigerem Füllstoffgehalt im Bereich von 2,5 bis 3,5 mm liegt, während die Dicke der Schicht mit höherem Füllstoffgehalt im Bereich von 3 bis 8 mm liegt.

18. Selbstverstärkte, thermoplastisch formbare Platte gemäß einem oder mehreren der vorhergehenden Ansprüche, **dadurch gekennzeichnet, daß** die Dicke der Schicht mit niedrigerem Füllstoffgehalt im Bereich von 2,5 bis 3,5 mm liegt, während die Dicke der Schicht mit höherem Füllstoffgehalt im Bereich von 4 bis 6 mm liegt.

19. Selbstverstärkte, thermoplastisch formbare Platte gemäß einem oder mehreren der vorhergehenden Ansprüche, **dadurch gekennzeichnet, daß** die Schicht mit niedrigerem Füllstoffgehalt durch die Polymerisation eines (Meth)acrylat-Systems erhältlich ist, welches enthält:
A)
| | |
|---|---|
| a) (Meth)acrylat | 30 -100 Gew.-% |
| a1) Methyl(meth)acrylat | 0 - 99,99 Gew.-% |
| a2) C₂-C₄ (Meth)acrylat | 0 - 99,99 Gew.-% |
| a3) ≥ C₅ (Meth)acrylat | 0 - 50 Gew.-% |
| a4) mehrwertige (Meth)acrylate | 0,01 - 50 Gew.-% |
| a5) Urethan(meth)acrylate | 0 - 50 Gew.-% |
| b) Comonomere | 0 - 70 Gew.-% |
| b1) Vinylaromaten | 0 - 35 Gew.-% |
| b2) Vinylester | 0 - 35 Gew.-%, |
wobei die Komponenten a1) bis a5) so ausgewählt sind, daß sie 30 bis 100 Gew.-% a) ergeben und die Komponenten b1) bis b2) so gewählt sind, dass sie 0 bis 70 Gew.-% b) ergeben, während a) und b) zusammen 100 Gew.-% der Komponente A) ergeben,
B) auf 1 Gew.-Teil A) 0 -12 Gew.-Teile eines in A) löslichen oder quellbaren (Pre)polymers
C) Initiator in einer Menge ausreichend zur Härtung der Komponente A)
D) gegebenenfalls Mittel zur Einstellung der Viskosität des Systems,
E) übliche Additive in einer Menge von bis zu 3 Gew.-Teilen auf 1 Gew.-Teil A)
F) weniger als 0.25 Gew.-Teile verstärkend wirkende Füllstoffe auf 1 Gew.-Teil Bindemittel (Summe aus A) bis E)).

20. Selbstverstärkte, thermoplastisch formbare Platte gemäß einem oder mehreren der vorhergehenden Ansprüche, **dadurch gekennzeichnet, daß** die Schicht mit hohem Füllstoffgehalt durch die Polymerisation eines (Meth)acrylat-Systems erhältlich ist,
welches enthält:
A)
| | |
|---|---|
| a) (Meth)acrylat | 50-100 Gew.-% |
| a1) Methyl(meth)acrylat | 0 - 99,99 Gew.-% |
| a2) C₂-C₄ (Meth)acrylat | 0 - 99,99 Gew.-% |
| a3) ≥C₅ (Meth)acrylat | 0 - 50 Gew.-% |
| a4) mehrwertige (Meth)acrylate | 0,01 - 50 Gew.-% |
| a5) Urethan(meth)acrylate | 0-50 Gew.-% |
| b) Comonomere | 0 - 50 Gew.-% |
| b1) Vinylaromaten | 0 - 50 Gew.-% |
| b2) Vinylester | 0 - 50 Gew.-%, |
wobei die Komponenten a) und b) so gewählt sind, dass sie zusammen 100 Gew.-% der polymerisierbaren Komponente A) ergeben,
B) auf 1 Gew.-Teil A) 0 - 12 Gew.-Teile eines in A) löslichen oder quellbaren (Pre)polymers,
C) Initiator in einer Menge ausreichend zur Härtung der Komponente A),
D) gegebenenfalls Mittel zur Einstellung der Viskösität des Systems,
E) übliche Additive in einer Menge bis zu 3 Gew.-Teile auf 1 Gew.-Teil A) und
F) 0,25 bis 4 Gew.-Teile verstärkend wirkende Füllstoffe auf 1 Gew.-Teil Bindemittel (Summe aus A) bis E)).

21. Verfahren zur Herstellung einer selbstverstärkten, thermoplastisch formbaren Platte gemäß einem oder mehreren der Ansprüche 1 bis 20, **dadurch gekennzeichnet, daß** man mindestens eine Schicht mit höherem Füllstoffgehalt und eine Schicht mit geringerem Füllstoffgehalt miteinander verbindet.

22. Verfahren zur Herstellung einer selbstverstärkten, thermoplastisch formbaren Platte gemäß Anspruch 21, **dadurch gekennzeichnet, daß** man mindestens eine in einem Extrusionsverfahren erhaltene Schicht mit höherem Füllstoffgehalt und eine Schicht mit geringerem Füllstoffgehalt miteinander verbindet.

23. Verfahren gemäß Anspruch 21, **dadurch gekennzeichnet, daß** man die Schichten aufeinander kaschiert.

24. Verfahren gemäß Anspruch 23, **dadurch gekennzeichnet, daß** man die Schichten mittels eines Klebstoffs kaschiert.

25. Verfahren zur Herstellung einer selbstverstärkten, thermoplastisch formbaren Platte gemäß Anspruch 21, **dadurch gekennzeichnet, daß** man die Schicht mit niedrigerem Füllstoffgehalt und die Schicht mit höherem Follstoffgehalt coextrudiert.

26. Verfahren zur Herstellung einer selbstverstärkten, thermoplastisch formbaren Platte gemäß Anspruch 21, **dadurch gekennzeichnet, daß** man die Schicht mit niedrigerem Füllstoffgehalt auf die Schicht mit höherem Füllstoffgehalt oder die Schicht mit höherem Füllstoffgehalt auf die Schicht mit niedrigerem Füllstoffgehalt polymerisiert.

27. Verfahren nach Anspruch 26, **dadurch gekennzeichnet, dass** man als Schicht mit höherem Füllstoffgehalt eine Platte einsetzt, die man im Kammerverfahren auf eine untere Formglasplattenseite der Kammer auflegt, wonach man zum Erhalt einer Schicht mit niedrigerem Füllstoffgehalt ein (Meth)acrylatsystem in die Kammer auf die eingelegte Platte mit höherem Füllstoffgehalt gießt und im Kammerverfahren aufpolymerisiert.

28. Verfahren gemäß Anspruch 21, **dadurch gekennzeichnet, daß** man die Schicht mit niedrigerem Füllstoffgehalt und die Schicht mit höherem Füllstoffgehalt durch thermisches Verschmelzen miteinander verbindet.

29. Sanitärartikel, hergestellt aus einer selbstverstärkten, thermoplastisch formbaren Platte gemäß einem oder mehreren der Ansprüche 1 bis 20.

30. Sanitärartikel gemäß Anspruch 29, **dadurch gekennzeichnet, daß** der Sanitärartikel eine Badewanne, Duschwanne oder Waschbecken ist.

31. Verfahren zur Herstellung eines Sanitärartikels gemäß Anspruch 29 oder 30, **dadurch gekennzeichnet, daß** man eine Platte gemäß einem oder mehreren der Ansprüche 1 bis 20 unter Verwendung von Wärme und Druck formt.

32. Verfahren zur Herstellung eines Sanitärartikels gemäß Anspruch 31, **dadurch gekennzeichnet, daß** man eine Platte gemäß einem oder mehreren der Ansprüche 1 bis 20 tiefzieht.

## Claims

1. Self-reinforced, thermoplastically formable sheet of poly(meth)acrylate comprising at least two layers which differ in their filler content, the filler content indicating the percentage of the weight of the reinforcing fillers as a proportion of the total weight of the layer in question, **characterised in that** the ratio of the elongation at break of the layer with the higher filler content to the elongation at break of the layer with the lower filler content is less than 1.5, the elongation at break for the respective layer being determined according to DIN EN ISO 527-2.

2. Self-reinforced, thermoplastically formable sheet of poly(meth)acrylate according to claim 1 for the manufacture of sanitary articles such as bath tubs and shower basins by thermoforming, **characterised in that** the ratio of the elongation at break of the layer with the higher filler content to the elongation at break of the layer with the lower filler content is less than 1.5, the elongation at break for the respective layer being determined according to DIN EN ISO 527-2.

3. Self-reinforced, thermoplastically formable sheet according to claim 1, **characterised in that** the ratio of the elongation at break of the layer with the higher filler content to the elongation at break of the layer with the lower filler content is in the range from 0.8 to 0.1, the elongation at break for the respective layer being determined according to DIN EN ISO 527-2.

4. Self-reinforced, thermoplastically formable sheet according to claim 1, **characterised in that** the ratio of the elongation at break of the layer with the higher filler content to the elongation at break of the layer with the lower filler content is in the range from 0.6 to 0.1, the elongation at break for the respective layer being determined according to DIN EN ISO 527-2.

5. Self-reinforced, thermoplastically formable sheet according to claim 1, **characterised in that** the layer with the lower filler content is free from reinforcing fillers.

6. Self-reinforced, thermoplastically formable sheet according to claim 1, **characterised in that** the ratio of the filler content of the layer with the higher filler content to the filler content of the layer with the lower filler content is greater than 2.

7. Self-reinforced, thermoplastically formable sheet according to claim 1, **characterised in that** the ratio of the filler content of the layer with the higher filler content to the filler content of the layer with the lower filler content is greater than 4.

8. Self-reinforced, thermoplastically formable sheet according to claim 1, **characterised in that** the ratio of the filler content of the layer with the higher filler content to the filler content of the layer with the lower filler content is greater than 16.

9. Self-reinforced, thermoplastically formable sheet according to one or more of the preceding claims, **characterised in that** one or more fillers selected from the group comprising talc, dolomite, mica, quartz, natural intergrowths of talc and dolomite, chlorite, aluminium oxide, aluminium hydroxide, clays, silicon dioxide, silicates, carbonates, phosphates, sulphates, sulphides, metal oxides, powdered glass, glass beads, ceramics, kaolin, porcelain, cristobalite, feldspar, chalk, carbon and/or hollow microparticles filled with inert gas, are used as reinforcing fillers.

10. Self-reinforced, thermoplastically formable sheet according to one or more of the preceding claims, **characterised in that** the reinforcing fillers are in the form of beads, spheres and/or lamellae.

11. Self-reinforced, thermoplastically formable sheet according to one or more of the preceding claims, **characterised in that** the average particle size of the reinforcing filler is in the range from 0.01 to 80 µm.

12. Self-reinforced, thermoplastically formable sheet according to one or more of the preceding claims, **characterised in that** the average particle size of the reinforcing filler is in the range from 0.05 to 30 µm.

13. Self-reinforced, thermoplastically formable sheet according to one or more of the preceding claims, **characterised in that** the sheet comprises two layers with different filler contents, the thickness of each layer being in the range from 0.5 to 10 mm.

14. Self-reinforced, thermoplastically formable sheet according to one or more of the preceding claims, **characterised in that** the sheet comprises two layers with different filler contents, the thickness of each layer being in the range from 1.5 to 7 mm.

15. Self-reinforced, thermoplastically formable sheet according to one or more of the preceding claims, **characterised in that** the thickness of the layer with a lower filler content is in the range from 2 to 4 mm, whereas the thickness of the layer with a higher filler content is in the range from 3 to 8 mm.

16. Self-reinforced, thermoplastically formable sheet according to one or more of the preceding claims, **characterised in that** the thickness of the layer with a lower filler content is in the range from 2 to 4 mm, whereas the thickness of the layer with a higher filler content is in the range from 4 to 6 mm.

17. Self-reinforced, thermoplastically formable sheet according to one or more of the preceding claims, **characterised in that** the thickness of the layer with a lower filler content is in the range from 2.5 to 3.5 mm, whereas the thickness of the layer with a higher filler content is in the range from 3 to 8 mm.

18. Self-reinforced, thermoplastically formable sheet according to one or more of the preceding claims, **characterised in that** the thickness of the layer with a lower filler content is in the range from 2.5 to 3.5 mm, whereas the thickness of the layer with a higher filler content is in the range from 4 to 6 mm.

19. Self-reinforced, thermoplastically formable sheet according to one or more of the preceding claims, **characterised in that** the layer with a lower filler content can be obtained by polymerisation of a (meth)acrylate system which contains:
A)
| | | |
|---|---|---|
| a) | (meth)acrylate | 30 - 100 wt.% |
| a1) | methyl (meth)acrylate | 0 - 99.99 wt.% |
| a2) | C₂-C₄ (meth)acrylate | 0 - 99.99 wt.% |
| a3) | ≥ C₅ (meth)acrylate | 0 - 50 wt.% |
| a4) | polyhydric (meth)acrylates | 0.01 - 50 wt.% |
| a5) | urethane (meth)acrylates | 0 - 50 wt.% |
| b) | comonomers | 0 - 70 wt.% |
| b1) | aromatic vinyl compounds | 0 - 35 wt.% |
| b2) | vinyl esters | 0 - 35 wt.%, |
the components a1) to a5) being selected to make up 30 to 100 wt.% of a) and the components b1) to b2) being selected to make up 0 to 70 wt.%, while a) and b) together make up 100 wt.% of component A),
B) to 1 part by weight of A), 0 12 parts by weight of a (pre) polymer which is soluble or swellable in A),
C) initiator in an amount sufficient for the hardening of component A)
D) optionally means for adjusting the viscosity of the system,
E) conventional additives in an amount of up to 3 parts by weight to 1 part by weight of A)
F) less than 0.25 parts by weight of reinforcing fillers to 1 part by weight of binder (sum of A) to E)).

20. Self-reinforced, thermoplastically formable sheet according to one or more of the preceding claims, **characterised in that** the layer with a higher filler content can be obtained by polymerisation of a (meth)acrylate system which contains:
A)
| | | |
|---|---|---|
| a) | (meth)acrylate | 50 - 100 wt.% |
| a1) | methyl (meth)acrylate | 0-99.99 wt.% |
| a2) | C₂-C₄ (meth)acrylate | 0 - 99.99 wt.% |
| a3) | ≥ C₅ (meth)acrylate | 0-50 wt.% |
| a4) | polyhydric (meth)acrylates | 0.01 - 50 wt.% |
| a5) | urethane (meth)acrylates | 0-50 wt.% |
| b) | comonomers | 0-50 wt.% |
| b1) | aromatic vinyl compounds | 0-50 wt.% |
| b2) | vinyl esters | 0 - 50 wt.%, |
the components a) and b) being selected so that together they make up 100 wt.% of the polymerisable component A),
B) to 1 part by weight of A), 0 - 12 parts by weight of a (pre)polymer which is soluble or swellable in A),
C) initiator in an amount sufficient for the hardening of component A),
D) optionally means for adjusting the viscosity of the system,
E) conventional additives in an amount of up to 3 parts by weight to 1 part by weight of A) and
F) 0.25 to 4 parts by weight of reinforcing fillers to 1 part by weight of binder (sum of A) to E)).

21. Method of producing a self-reinforced, thermoplastically formable sheet according to one ore more of claims 1 to 20, **characterised in that** at least one layer with a higher filler content and one layer with a lower filler content are joined together.

22. Method of producing a self-reinforced, thermoplastically formable sheet according to claim 21, **characterised in that** at least one layer with a higher filler content obtained by extrusion and one layer with a lower filler content are joined together.

23. Method according to claim 21, **characterised in that** the layers are laminated onto one another.

24. Method according to claim 23, **characterised in that** the layers are laminated using an adhesive.

25. Method of producing a self-reinforced, thermoplastically formable sheet according to claim 21, **characterised in that** the layer with a lower filler content and the layer with a higher filler content are coextruded.

26. Method of producing a self-reinforced, thermoplastically formable sheet according to claim 21, **characterised in that** the layer with a lower filler content is polymerised onto the layer with a higher filler content or the layer with a higher filler content is polymerised onto the layer with a lower filler content.

27. Method according to claim 26, **characterised in that** a sheet which is placed onto a lower glass mould panel of the chamber in the chamber method is used as the layer with a higher filler content and thereafter, in order to obtain a layer with a lower filler content, a (meth)acrylate system is poured onto the sheet with a higher filler content placed in the chamber and polymerisation is carried out by the chamber method.

28. Method according to claim 21, **characterised in that** the layer with a lower filler content and the layer with a higher filler content are joined together by thermal fusion.

29. Sanitary article manufactured from a self-reinforced, thermoplastically formable sheet according to one or more of claims 1 to 20.

30. Sanitary article according to claim 29, **characterised in that** the sanitary article is a bath tub, shower basin or wash basin.

31. Method of manufacturing a sanitary article according to claim 29 or 30, **characterised in that** a sheet according to one ore more of claims 1 to 20 is shaped by the use of heat and pressure.

32. Method of manufacturing a sanitary article according to claim 31, **characterised in that** a sheet according to one ore more of claims 1 to 20 is thermoformed.

## Revendications

1. Panneau autorenforcé thermoplastique moulable en poly-(méth)acrylate présentant au moins deux couches qui se distinguent par leur teneur en charges, la teneur en charges indiquant le pourcentage en poids des charges ayant une action renforçatrice dans le poids total de la couche concernée,
**caractérisé en ce que**
le rapport entre l'élongation à la rupture de la couche ayant une plus forte teneur en charges et l'élongation à la rupture de la couche ayant une plus faible teneur en charges est inférieur à 1,5, l'élongation à la rupture de la couche concernée étant déterminée d'après la norme DIN EN ISO 527-2.

2. Panneau autorenforcé thermoplastique moulable en poly-(méth)acrylate selon la revendication 1 permettant de fabriquer des articles sanitaires comme les baignoires et les receveurs de douche par emboutissage,
**caractérisé en ce que**
le rapport entre l'élongation à la rupture de la couche ayant une plus forte teneur en charges et l'élongation à la rupture de la couche ayant une plus faible teneur en charges est inférieur à 1,5, l'élongation à la rupture de la couche concernée étant déterminée d'après la norme DIN EN ISO 527-2.

3. Panneau autorenforcé thermoplastique moulable selon la revendication 1,
**caractérisé en ce que**
le rapport entre l'élongation à la rupture de la couche ayant une plus forte teneur en charges et l'élongation à la rupture de la couche ayant une plus faible teneur en charges est de l'ordre de 0,8 à 0,1, l'élongation à la rupture de la couche concernée étant déterminée d'après la norme DIN EN ISO 527-2.

4. Panneau autorenforcé thermoplastique moulable selon la revendication 1,
**caractérisé en ce que**
le rapport entre l'élongation à la rupture de la couche ayant une plus forte teneur en charges et l'élongation à la rupture de la couche ayant une plus faible teneur en charges est de l'ordre de 0,6 à 0,1, l'élongation à la rupture de la couche concernée étant déterminée d'après la norme DIN EN ISO 527-2.

5. Panneau autorenforcé thermoplastique moulable selon la revendication 1,
**caractérisé en ce que**
la couche ayant une plus faible teneur en charges est dépourvue de charges à action renforçatrice.

6. Panneau autorenforcé thermoplastique moulable selon la revendication 1,
**caractérisé en ce que**
le rapport entre la teneur en charges de la couche ayant une plus forte teneur en charges et la teneur en charges de la couche ayant une plus faible teneur en charges est supérieur à 2.

7. Panneau autorenforcé thermoplastique moulable selon la revendication 1,
**caractérisé en ce que**
le rapport entre la teneur en charges de la couche ayant une plus forte teneur en charges et la teneur en charges de la couche ayant une plus faible teneur en charges est supérieur à 4.

8. Panneau autorenforcé thermoplastique moulable selon la revendication 1,
**caractérisé en ce que**
le rapport entre la teneur en charges de la couche ayant une plus forte teneur en charges et la teneur en charges de la couche ayant une plus faible teneur en charges est supérieur à 16.

9. Panneau autorenforcé thermoplastique moulable selon l'une quelconque ou plusieurs des revendications précédentes,
**caractérisé en ce que**
comme charges à action renforçatrice, on utilise une ou plusieurs charges du groupe comprenant le talc, la dolomite, le mica, le quartz, des intercroissances naturelles de talc et de dolomite, le chlorite, l'oxyde d'aluminium, l'hydroxyde d'aluminium, les argiles, le dioxyde de silicium, les silicates, les carbonates, les phosphates, les sulfates, les sulfures, les oxydes métalliques, le verre pulvérisé, les billes de verre, la céramique, le caolin, la porcelaine, la cristobalite, le feldspath, la craie, le carbone et/ou les microparticules creuses remplies de gaz inerte.

10. Panneau autorenforcé thermoplastique moulable selon l'une quelconque ou plusieurs des revendications précédentes,
**caractérisé en ce que**
les charges à action renforçatrice ont une forme ronde, sphérique et/ou de plaquettes.

11. Panneau autorenforcé thermoplastique moulable selon l'une quelconque ou plusieurs des revendications précédentes,
**caractérisé en ce que**
la taille moyenne des particules de la charge à action renforçatrice est de l'ordre de 0,01 à 80 µm.

12. Panneau autorenforcé thermoplastique moulable selon l'une quelconque ou plusieurs des revendications précédentes,
**caractérisé en ce que**
la taille moyenne des particules de la charge à action renforçatrice est de l'ordre de 0,05 à 30 µm.

13. Panneau autorenforcé thermoplastique moulable selon l'une quelconque ou plusieurs des revendications précédentes,
**caractérisé en ce que**
le panneau comporte deux couches ayant une teneur en charges différente, dont l'épaisseur est respectivement de l'ordre de 0,5 à 10 mm.

14. Panneau autorenforcé thermoplastique moulable selon l'une quelconque ou plusieurs des revendications précédentes,
**caractérisé en ce que**
le panneau comporte deux couches ayant une teneur en charges différente dont l'épaisseur est respectivement de l'ordre de 1,5 à 7 mm.

15. Panneau autorenforcé thermoplastique moulable selon l'une quelconque ou plusieurs des revendications précédentes,
**caractérisé en ce que**
l'épaisseur de la couche ayant une plus faible teneur en charges est de l'ordre de 2 à 4 mm, alors que l'épaisseur de la couche ayant une plus forte teneur en charges est de l'ordre de 3 à 8 mm.

16. Panneau autorenforcé thermoplastique moulable selon l'une quelconque ou plusieurs des revendications précédentes,
**caractérisé en ce que**
l'épaisseur de la couche ayant une plus faible teneur en charges est de l'ordre de 2 à 4 mm, alors que l'épaisseur de la couche ayant une plus forte teneur en charges est de l'ordre de 4 à 6 mm.

17. Panneau autorenforcé thermoplastique moulable selon l'une quelconque ou plusieurs des revendications précédentes,
**caractérisé en ce que**
l'épaisseur de la couche ayant une plus faible teneur en charges est de l'ordre de 2,5 à 3,5 mm, alors que l'épaisseur de la couche ayant une plus forte teneur en charges est de l'ordre de 3 à 8 mm.

18. Panneau autorenforcé thermoplastique moulable selon l'une quelconque ou plusieurs des revendications précédentes,
**caractérisé en ce que**
l'épaisseur de la couche ayant une plus faible teneur en charges est de l'ordre de 2,5 à 3,5 mm, alors que l'épaisseur de la couche ayant une plus forte teneur en charges est de l'ordre de 4 à 6 mm.

19. Panneau autorenforcé thermoplastique moulable selon l'une quelconque ou plusieurs des revendications précédentes,
**caractérisé en ce que**
la couche ayant une plus faible teneur en charges peut être obtenue par la polymérisation d'un système (méth)acrylate qui contient :
A.
| | | |
|---|---|---|
| a) | du méthacrylate | 30 à 100 % en poids |
| a1) | du (méth)acrylate de méthyle | 0 à 99,99 % en poids |
| a2) | du (méth)acrylate en C₂ à C₄ | 0 à 99,99 % en poids |
| a3) | du (méth)acrylate en ≥ C₅ | 0 à 50 % en poids |
| a4) | des (méth)acrylates polyvalents | 0,01 à 50 % en poids |
| a5) | des (méth)acrylates d'uréthane | 0 à 50 % en poids |
| b) | des comonomères | 0 à 70 % en poids |
| b1) | des vinylaromatiques | 0 à 35 % en poids |
| b2) | des esters vinyliques | 0 à 35 % en poids, |
les composants a1) à a5) étant sélectionnés de manière à donner 30 à 100 % en poids de a) et les composants b1) à b2) étant choisis de manière à donner 0 à 70 % en poids de b), alors que a) et b) ensemble donnent 100 % en poids du composant A),
B. pour 1 partie en poids de A) 0 à 12 parties en poids d'un (pré)polymère soluble ou pouvant gonfler dans A)
C. un amorceur dans une quantité suffisante pour durcir le composant A)
D. le cas échéant, des agents permettant l'ajustement de la viscosité du système,
E. des additifs usuels dans une quantité pouvant aller jusqu'à 3 parties en poids pour une partie en poids de A), et
F. moins de 0,25 partie en poids de charges à action renforçatrice pour 1 partie en poids de liant (total de A) à E)).

20. Panneau autorenforcé thermoplastique moulable selon l'une quelconque ou plusieurs des revendications précédentes,
**caractérisé en ce que**
la couche ayant une forte teneur en charges peut être obtenue par la polymérisation d'un système (méth)acrylate qui contient :
A.
| | | |
|---|---|---|
| a) | du méthacrylate | 50 à 100 % en poids |
| a1) | du (méth)acrylate de méthyle | 0 à 99,99 % en poids |
| a2) | du (méth)acrylate en C₂ à C₄ | 0 à 99,99 % en poids |
| a3) | du(méth)acrylate en ≥ C₅ | 0 à 50 % en poids |
| a4) | des (méth)acrylates polyvalents | 0,01 à 50 % en poids |
| a5) | des (méth)acrylates d'uréthane | 0 à 50 % en poids |
| b) | des comonomères | 0 à 50 % en poids |
| b1) | des vinylaromatiques | 0 à 50 % en poids |
| b2) | des esters vinyliques | 0 à 50 % en poids, |
les composants a) et b) étant choisis de manière à donner ensemble 100 % en poids du composant A) polymérisable,
B. pour 1 partie en poids de A) 0 à 12 parties en poids d'un (pré)polymère soluble ou pouvant gonfler dans A)
C. un amorceur dans une quantité suffisante pour durcir le composant A)
D. le cas échéant, des agents permettant l'ajustement de la viscosité du système,
E. des additifs usuels dans une quantité pouvant aller jusqu'à 3 parties en poids pour une partie en poids de A) ?
F. de 0,25 à 4 parties en poids de charges à action renforçatrice pour 1 partie en poids de liant (total de A) à E)).

21. Procédé de fabrication d'un panneau autorenforcé thermoplastique moulable selon l'une quelconque ou plusieurs des revendications 1 à 20,
**caractérisé en ce qu'**
on relie ensemble au moins une couche ayant une plus forte teneur en charges et une couche ayant une plus faible teneur en charges.

22. Procédé de fabrication d'un panneau autorenforcé thermoplastique moulable selon la revendication 21,
**caractérisé en ce qu'**
on relie ensemble au moins une couche ayant une plus forte teneur en charges, obtenue par extrusion, et une couche ayant une plus faible teneur en charges.

23. Procédé selon la revendication 21,
**caractérisé en ce qu'**
on lamine les couches les unes sur les autres.

24. Procédé selon la revendication 23,
**caractérisé en ce qu'**
on lamine les couches avec de la colle.

25. Procédé de fabrication d'un panneau autorenforcé thermoplastique moulable selon la revendication 21,
**caractérisé en ce qu'**
on co-extrude la couche ayant une plus faible teneur en charges et la couche ayant une plus forte teneur en charges.

26. Procédé de fabrication d'un panneau autorenforcé thermoplastique moulable selon la revendication 21,
**caractérisé en ce qu'**
on polymérise la couche ayant une plus faible teneur en charges sur la couche ayant une plus forte teneur en charges ou bien la couche ayant une plus forte teneur en charges sur la couche ayant une plus faible teneur en charges.

27. Procédé selon la revendication 26,
**caractérisé en ce que**
comme couche ayant une plus forte teneur en charges, on utilise un panneau que l'on pose, dans le procédé avec une chambre, sur un côté inférieur d'un panneau en verre moulé de la chambre, après quoi, pour obtenir une couche ayant une plus faible teneur en charges, on coule un système (méth)acrylate dans la chambre, sur le panneau ayant une plus forte teneur en charges, placé à l'intérieur, et on polymérise avec le procédé à chambre.

28. Procédé selon la revendication 21,
**caractérisé en ce qu'**
on relie ensemble la couche ayant une plus faible teneur en charges et la couche ayant une plus forte teneur en charges par fusion thermique.

29. Article sanitaire, fabriqué à partir d'un panneau autorenforcé thermoplastique moulable selon l'une quelconque ou plusieurs des revendications 1 à 20.

30. Article sanitaire selon la revendication 29,
**caractérisé en ce que**
l'article sanitaire est une baignoire, un récepteur de douche ou un lavabo.

31. Procédé de fabrication d'un article sanitaire selon la revendication 29 ou 30,
**caractérisé en ce qu'**
on modèle un panneau selon l'une quelconque ou plusieurs des revendications 1 à 20, en utilisant de la chaleur et de la pression.

32. Procédé de fabrication d'un article sanitaire selon la revendication 31,
**caractérisé en ce qu'**
on emboutit un panneau selon l'une quelconque ou plusieurs des revendications 1 à 20.
